# EUROPEAN PATENT SPECIFICATION

(11) **EP 4 583 552 B1**
(45) Date of publication and mention of the grant of the patent: **23.09.2026**
(21) Application number: 23902289.0
(22) Date of filing: 23.10.2023
(51) Int. Cl.: H04W 4/16, H04W 8/18, H04W 36/00, H04W 60/00, H04W 88/06

(54) **DATA TRANSMISSION METHOD AND TERMINAL DEVICE**
DATENÜBERTRAGUNGSVERFAHREN UND ENDGERÄTEVORRICHTUNG
PROCÉDÉ DE TRANSMISSION DE DONNÉES ET ÉQUIPEMENT TERMINAL

(30) Priority: 15.12.2022 CN 202211620134
(43) Date of publication of application: 09.07.2025
(73) Proprietor: Honor Device Co., Ltd., Shenzhen, Guangdong 518040 (CN)
(72) Inventor: YANG, Fei, Shenzhen, Guangdong 518040 (CN)
(74) Representative: Isarpatent
(86) International application number: PCT/CN2023/125988
(87) International publication number: WO 2024/125089

(56) References cited:
- EP-A1- 4 156 774
- WO-A1-2021/232206
- WO-A1-2022/241364
- CN-A- 106 231 690
- CN-A- 113 348 726
- CN-A- 114 339 922
- US-A1- 2017 150 468
- US-A1- 2022 248 274
- US-A1- 2022 369 191

## Description

### TECHNICAL FIELD

This specification generally relates to the field of communication technologies, and the invention relates, in particular, to a data transmission method, a terminal device, a computer-readable storage medium as well as a computer program product.

### BACKGROUND

With the high-speed development of wireless communication technologies, people depend on wireless terminals more and more. To bring better service experience to users, terminal devices supporting dual-SIM dual-standby (DSDS) are currently included on the market. The terminal devices supporting dual-SIM dual-standby further include terminal devices supporting dual-SIM dual-standby single-active (dual-SIM single-active for short below) and terminal devices supporting dual-SIM dual-standby dual-active (DSDA, dual-SIM dual-active for short below). Two independent subscriber identity modules (SIMs) may be installed on either the terminal device supporting dual-SIM single-active or the terminal device supporting dual-SIM dual-active. For the terminal device supporting dual-SIM single-active, although two SIM cards can standby at the same time, the two SIM cards cannot simultaneously perform a voice call or use data traffic to access the Internet. For the terminal device supporting dual-SIM dual-active, two SIM cards may standby at the same time, and may perform voice calls at the same time (for example, one SIM card is performing a call, and the other SIM card may receive an incoming call).

An example in which the two cards are respectively a SIM card 1 and a SIM card 2 is used. For a dual-SIM dual-active terminal device that supports only registering two cards on a fifth generation wireless communication technology (5G) network, in a scenario in which the SIM card 1 is performing a call and the SIM card 2 has an incoming call, if a network of the SIM card 1 and/or the SIM card 2 switches from the 5G network to a fourth generation wireless communication technology (4G) network, the terminal device falls back from dual-SIM dual-active to dual-SIM single-active. When the terminal device is dual-SIM single-active, because the SIM card 1 is performing a call, the SIM card 2 cannot use a data service and cannot call or be called, and the terminal device actively hangs up an incoming call of the SIM card 2.

However, the terminal device hangs up the incoming call of the SIM card 2 locally, and a message indicating that the incoming call is hung up is not synchronized to a network device. In this way, session statuses of a card slot of the SIM card 2 and the network device are not synchronized, and the network device considers that the SIM card 2 is still performing a call service, resulting in that the SIM card 2 cannot call or be called subsequently.

US 2022/0248274 A1 generally relates to wireless communications. In some aspects, a user equipment (UE) may receive, while the UE is in an active session using a first radio access technology (RAT) associated with a first subscription of the UE, a call request via the first RAT, wherein the call request is associated with a second subscription of the UE. The UE may determine that the call request is received from a serving cell that is associated with fallback from the first RAT to a second RAT for calls. The UE may reject the call request or transition the second subscription to a third RAT based at least in part on the determination that the call request is received via the serving cell that is associated with fallback from the first RAT to the second RAT for calls.

WO 2022/241364 A1 also generally relates to wireless communications. In some aspects, a user equipment (UE) may establish a first call associated with a first subscriber of the UE. The UE may establish a second call associated with a second subscriber of the UE, wherein the first subscriber and the second subscriber are active contemporaneously, and wherein the first call and the second call are associated with a first radio access technology (RAT). The UE may identify a mobility event that is associated with an interruption to at least one of the first call and the second call, the mobility event involving switching the first subscriber to a second RAT. The, the UE may perform a mitigation action.

### SUMMARY

The invention is defined by the appended set of claims.

### BRIEF DESCRIPTION OF DRAWINGS

FIG. 1 is a schematic diagram of a structure of a terminal device applicable to an embodiment of this application;
FIG. 2 is a schematic diagram of a communication scenario according to an embodiment of this application;
FIG. 3 is a schematic flowchart of a call method according to an embodiment of this application;
FIG. 4 is a schematic flowchart of a data transmission method according to an embodiment of this application;
FIG. 5A to FIG. 5C are a schematic diagram of network switching according to an embodiment of this application;
FIG. 6 is a schematic flowchart of another data transmission method according to an embodiment of this application;
FIG. 7 is a schematic diagram of a call interface of a terminal device having a 5G dual-SIM dual-active functionnot belonging to the invention but contributing to the understanding of the invention as claimed; and
FIG. 8 is a schematic flowchart of still another data transmission method not belonging to the invention but contributing to the understanding of the invention as claimed.

### DESCRIPTION OF EMBODIMENTS

The following describes technical solutions of this application with reference to the accompanying drawings.

To facilitate clear description of the technical solutions of embodiments of this application, the following briefly introduces some terms and technologies involved in embodiments of this application:
1. In embodiments of this application, the terms "first", "second", and the like are used to distinguish between same or similar items with a basically same function and role, and are not intended to limit a sequence thereof. A person skilled in the art may understand that the terms "first", "second", and the like do not limit a quantity and an execution order, and the terms "first", "second", and the like do not indicate a definite difference.
2. In this application, the term "example" or "for example" is used to represent giving an example, an illustration, or a description. Any embodiment or design scheme described as an "example" or "for example" in embodiments of this application should not be explained as being more preferable or more advantageous than another embodiment or design scheme. Exactly, use of the term such as "example" or "for example" is intended to present a related concept in a specific manner.
3. The term "at least one" means one or more, and the term "a plurality of" means two or more. The term "and/or" describes an association relationship between associated objects and represents that three relationships may exist. For example, A and/or B may represent that: only A exists, both A and B exist, and only B exists, where A and B may be singular or plural. The character "/" generally indicates an "or" relationship between the associated objects. "At least one of the following items (pieces)" or a similar expression means any combination of these items, including a single item (piece) or any combination of a plurality of items (pieces). For example, at least one item (piece) of a, b, and c may represent a, b, c, a and b, a and c, b and c, or a, b, and c, where a, b, and c may be singular or plural.
4. Usually, a terminal device reports a measurement report to perform mobile management of a wireless communication system, and a base station determines, based on the measurement report, whether to perform network switching (for example, switch from a 5G cell to a 4G cell). The terminal device may measure the signal quality of the serving cell and/or the inter-system neighbor cell by using a plurality of measurement indicators. The plurality of measurement indicators may include reference signal received power (reference signal receiving power, RSRP), reference signal received quality (reference signal receiving quality, RSRQ), and a signal to interference plus noise ratio (signal to interference plus noise ratio, SINR).

Ideally, the base station allows the terminal device to report signal quality of a current serving cell and a neighbor cell (including an inter-system neighbor cell), and triggers switching through single-side measurement. However, during actual application, unnecessary ping-pong handover may cause an overload situation. To avoid this situation, 3rd generation partnership project (3rd generation partnership project, 3GPP) specification 38.331 defines a set of predefined measurement report mechanisms executed by a terminal device. Types of these measurement reports are referred to as "events (events)", for example, an A1 event, an A2 event, a B1 event, and a B2 event. A type of an event that needs to be reported by the terminal device is specified by a radio resource control (radio resource control, RRC) message, such as an RRC connection reconfiguration (RRC connection reconfiguration) message, sent by the base station.

It should be noted that in embodiments of this application, "when ... " may be an instantaneous occurrence time of a case, or may be a period of time after occurrence of a case, which is not specifically limited in embodiments of this application. In addition, a display interface provided in embodiments of this application is merely used as an example, and the display interface may further include more or less content.

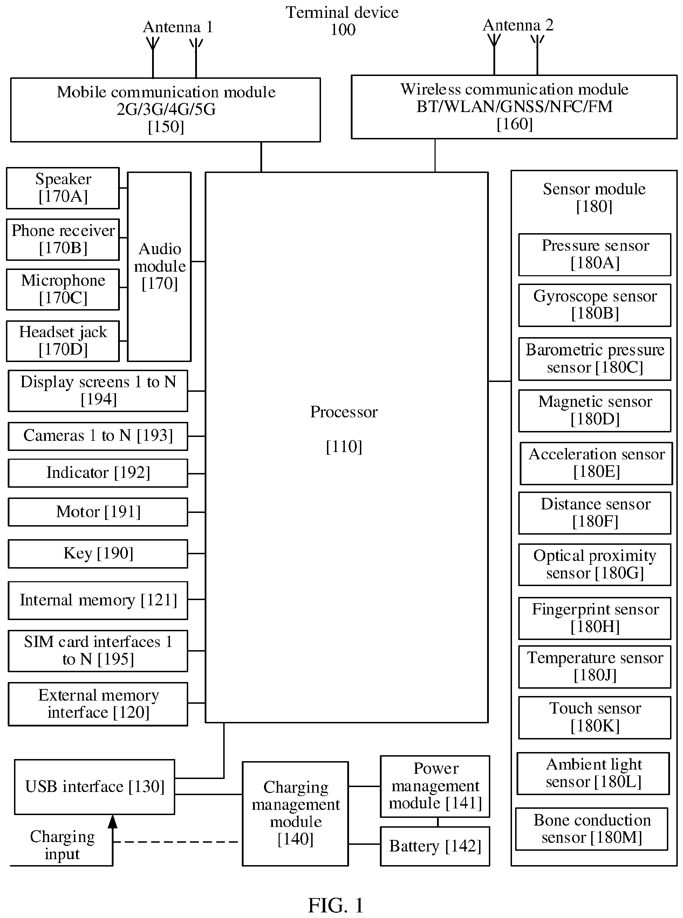

FIG. 1 is a schematic diagram of a structure of a terminal device applicable to an embodiment of this application. As shown in FIG. 1, the terminal device 100 may include: a processor 110, an external memory interface 120, an internal memory 121, a USB interface 130, a charging management module 140, a power management module 141, a battery 142, an antenna 1, an antenna 2, a mobile communication module 150, a wireless communication module 160, an audio module 170, a speaker 170A, a phone receiver 170B, a microphone 170C, a headset jack 170D, a sensor module 180, a key 190, a motor 191, an indicator 192, a camera 193, a display screen 194, an SIM card interface 195, and the like.

It may be understood that the structure illustrated in this embodiment does not constitute a specific limitation on the terminal device 100. In some other embodiments of this application, the terminal device 100 may include more or fewer components than those shown in the figure, or some components may be combined, or some components may be divided, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a display process unit (display process unit, DPU), and/or a neural-network processing unit (neural-network processing unit, NPU). Different processing units may be separate devices, or may be integrated into one or more processors. In some embodiments, the terminal device 100 may further include one or more processors 110. The processor may be a nerve center and a command center of the terminal device 100. The processor may generate an operating control signal according to an instruction operation code and a sequence signal, to complete control of fetching and executing instructions. A memory may further be disposed in the processor 110, and is configured to store instructions and data. In some embodiments, the memory in the processor 110 is a cache memory. The memory may store instructions or data recently used or cyclically used by the processor 110. If the processor 110 needs to use the instructions or the data again, the processor 110 may directly invoke the instructions or the data from the memory. This avoids repeated access, and reduces waiting time of the processor 110, thereby improving efficiency of the terminal device 100.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a USB interface, and/or the like. The USB interface 130 is an interface conforming to the USB standard specification, and may specifically be a mini USB interface, a micro USB interface, a USB Type-C interface, or the like. The USB interface 130 may be configured to connect to a charger to charge the terminal device 100, or may be used for data transmission between the terminal device 100 and a peripheral device, or may be connected to a headset to play audio through the headset.

It may be understood that an interface connection relationship between the modules illustrated in this embodiment of this application is merely an example for description, and does not constitute a limitation on a structure of the terminal device 100. In some other embodiments of this application, the terminal device 100 may alternatively use an interface connection manner different from that in the foregoing embodiment, or use a combination of a plurality of interface connection manners.

A wireless communication function of the terminal device 100 may be implemented by using the antenna 1, the antenna 2, the mobile communications module 150, the wireless communication module 160, the modem processor, the baseband processor, and the like. The antenna 1 and the antenna 2 are configured to transmit and receive electromagnetic wave signals. Each antenna in the terminal device 100 may be configured to cover a single communication frequency band or a plurality of communication frequency bands. Different antennas may further be multiplexed to improve utilization of the antennas. For example, the antenna 1 may be multiplexed as a diversity antenna of a wireless local area network. In some other embodiments, the antenna may be used in combination with a tuning switch.

The mobile communication module 150 can provide a solution for wireless communication including 2G/3G/4G/5G and the like applied to the terminal device 100. The mobile communication module 150 may include at least one filter, a switch, a power amplifier, a low noise amplifier, and the like. The mobile communication module 150 may receive an electromagnetic wave by using the antenna 1, perform processing such as filtering and amplification on the received electromagnetic wave, and send the electromagnetic wave to the modem processor for demodulation. The mobile communication module 150 may further amplify a signal modulated by the modem processor, and convert the signal into an electromagnetic wave by using the antenna 1 for radiation. In some embodiments, at least some function modules of the mobile communication module 150 may be disposed in the processor 110. In some embodiments, at least some functional modules of the mobile communication module 150 may be disposed in a same device as at least some of modules of the processor 110.

The modem processor may include a modulator and a demodulator. The modulator is configured to modulate a low frequency baseband signal to be sent into a medium and high frequency signal. The demodulator is configured to demodulate the received electromagnetic wave signal into a low frequency baseband signal. Then the demodulator transfers the low frequency baseband signal obtained through demodulation to the baseband processor for processing. The low frequency baseband signal is processed by the baseband processor and then transferred to the application processor. The application processor outputs a sound signal through an audio device (which is not limited to the speaker 170A, the phone receiver 170B, and the like), or displays an image or a video through the display screen 194. In some embodiments, the modem processor may be an independent device. In some other embodiments, the modem processor may be independent of the processor 110, and is disposed in a same device as the mobile communication module 150 or another function module.

The wireless communication module 160 may provide a wireless communication solution that is applied to the terminal device 100 and that includes a wireless local area network (wireless local area network, WLAN), Bluetooth, a global navigation satellite system (global navigation satellite system, GNSS), frequency modulation (frequency modulation, FM), NFC, and an infrared (infrared, IR) technology. The wireless communication module 160 may be one or more devices integrating at least one communication processing module. The wireless communication module 160 receives an electromagnetic wave through the antenna 2, performs frequency modulation and filtering on the electromagnetic wave signal, and sends a processed signal to the processor 110. The wireless communication module 160 may further receive a to-be-sent signal from the processor 110, perform frequency modulation and amplification on the to-be-sent signal, and convert the to-be-sent signal into an electromagnetic wave by using the antenna 2 for radiation.

In some embodiments, in the terminal device 100, the antenna 1 is coupled to the mobile communication module 150, and the antenna 2 is coupled to the wireless communication module 160, so that the terminal device 100 can communicate with a network and another device by using a wireless communication technology. The wireless communication technology may include a GSM, a GPRS, CDMA, WCDMA, TD-SCDMA, LTE, a GNSS, a WLAN, NFC, FM, an IR technology, and/or the like. The foregoing GNSS may include a global positioning system (global positioning system, GPS), a global navigation satellite system (global navigation satellite system, GLONASS), a beidou navigation satellite system (beidou navigation satellite system, BDS), a quasi-zenith satellite system (quasi-zenith satellite system, QZSS), and/or satellite-based augmentation systems (satellite-based augmentation systems, SBAS).

The terminal device 100 may implement a display function by using the GPU, the display screen 194, the application processor, and the like. The application processor may include an NPU and/or a DPU. The GPU is a microprocessor for image processing and connects the display screen 194 and the application processor. The GPU is configured to perform mathematical and geometric calculations, and is configured to render graphics. The processor 110 may include one or more GPUs that execute instructions to generate or change display information. The NPU is a neural-network (neural-network, NN) computing processor that processes input information rapidly by referring to a structure of a biological neural network, for example, by referring to a transmission mode between human brain neurons, and can further perform self-learning continuously. Applications such as intelligent cognition of the terminal device 100, such as image recognition, facial recognition, speech recognition, and text understanding, can be implemented by using the NPU. The DPU is also referred to as a display sub-system (display sub-system, DSS). The DPU is configured to adjust a color of the display screen 194, and the DPU can adjust the color of the display screen by using a color three-dimensional (3 dimensional, 3D) look up table (look up table, LUT). The DPU can also perform scaling, noise reduction, contrast enhancement, backlight brightness management, HDR processing, display parameter Gamma adjustment, and the like.

The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-Led, a micro-Led, a micro-oLed, or quantum dot light emitting diodes (quantum dot light emitting diodes, QLED). In some embodiments, the terminal device 100 may include 1 or N display screens 194. N is a positive integer greater than 1.

The terminal device 100 may implement a shooting function by using the ISP, one or more cameras 193, the video codec, the GPU, one or more display screens 194, the application processor, and the like.

The external memory interface 120 may be configured to connect to an external storage card such as a micro SD card, to extend a storage capability of the terminal device 100. The external storage card communicates with the processor 110 through the external memory interface 120, to implement a data storage function, for example, store data files such as music, a photo, and a video into the external storage card.

The internal memory 121 may be configured to store one or more computer programs, and the one or more computer programs include instructions. The processor 110 may run the instructions stored in the internal memory 121, to enable the terminal device 100 to perform various function applications, data processing, and the like. The internal memory 121 may include a program storage area and a data storage area. The program storage area may store an operating system, and the program storage area may also store one or more applications (such as Gallery and Contacts) and the like. The data storage area may store data (for example, photos and contacts) and the like created during use of the terminal device 100. In addition, the internal memory 121 may include a high-speed random access memory, and may further include a non-volatile memory, for example, at least one disk storage device, a flash memory device, or a universal flash storage (universal flash storage, UFS). In some embodiments, the processor 110 may run the instructions stored in the internal memory 121 and/or instructions stored in the memory disposed in the processor 110, to enable the terminal device 100 to perform various function applications and data processing.

The terminal device 100 may implement an audio function, for example, music playback and recording, by using the audio module 170, the speaker 170A, the phone receiver 170B, the microphone 170C, the headset jack 170D, the application processor, and the like. The audio module 170 is configured to convert digital audio information into an analog audio signal, and convert an analog audio input into a digital audio signal. The audio module 170 may further be configured to encode and decode audio signals. In some embodiments, the audio module 170 may be disposed in the processor 110, or some function modules in the audio module 170 are disposed in the processor 110. The speaker 170A, also referred to as a "horn", is configured to convert an electrical audio signal into a sound signal. The terminal device 100 may be used to listen to music or listen to a hands-free call by using the speaker 170A. The phone receiver 170B, also referred to as an "earpiece", is configured to convert an electrical audio signal into a sound signal. When a call is answered or audio information is listened to by using the terminal device 100, the phone receiver 170B may be put close to a human ear to listen to a voice. The microphone 170C, also referred to as a "mike" or a "mic", is configured to convert a sound signal into an electrical signal. When making a call or sending voice information, a user may make a sound approaching the microphone 170C through the mouth of the user, to input a sound signal into the microphone 170C. At least one microphone 170C may be disposed in the terminal device 100. In some other embodiments, two microphones 170C may be disposed in the terminal device 100, to collect a sound signal and further implement a noise reduction function. In some other embodiments, alternatively, three, four, or more microphones 170C may be disposed in the terminal device 100, to collect a sound signal, reduce noise, and further identify a sound source, implement a directional recording function, and the like. The headset jack 170D is configured to be connected to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

In addition, an operating system, for example, an iOS operating system, an Android operating system, or a Windows operating system, runs on the foregoing components in the terminal device. An application may be installed and run on the operating system. In some other embodiments, there may be a plurality of operating systems running in the terminal device.

It should be understood that the hardware modules included in the terminal device shown in FIG. 1 are merely examples for description, and do not constitute a limitation on a specific structure of the terminal device. Actually, the terminal device provided in this embodiment of this application may further include other hardware modules having an interaction relationship with the hardware modules shown in the figure. This is not specifically limited herein. For example, the terminal device may further include a flash light, a micro projection apparatus, and the like. For another example, if the terminal device is a PC, the terminal device may further include components such as a keyboard and a mouse.

The terminal device in embodiments of this application may be a device having a wireless transceiver function, and may be deployed on land, including indoor or outdoor, handheld, wearable, or vehicle-mounted, may be deployed on water (for example, on a ship), or may be deployed in the air (for example, on an airplane, a balloon, or a satellite). The terminal device may be user equipment (user equipment, UE), an access terminal, a terminal unit, a subscriber unit (subscriber unit), a terminal station, a mobile station (mobile station, MS), a mobile console, a remote station, a remote terminal, a mobile device, a wireless communication device, a terminal agent, a terminal apparatus, or the like in a 5G network or a future evolved public land mobile network (public land mobile network, PLMN). The access terminal may be a cellular phone (cellular phone), a cordless phone, a session initiation protocol (SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device or a wearable device, a virtual reality (virtual reality, VR) terminal device, an augmented reality (augmented reality, AR) terminal device, a wireless terminal in industrial control (industrial control), a wireless terminal in self-driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. The terminal may be mobile or fixed. A specific type and structure of the terminal are not limited in embodiments of this application.

It should be understood that, in embodiments of this application, the terminal device may be an apparatus configured to implement a function of the terminal device, or may be an apparatus, for example, a chip system, that can support the terminal device in implementing the function. The apparatus may be installed in the terminal. In embodiments of this application, the chip system may include a chip, or may include a chip and another discrete device.

The terminal device in embodiments of this application may also be referred to as user equipment (UE), a mobile station (mobile station, MS), a mobile terminal (mobile terminal, MT), an access terminal, a subscriber unit, a subscriber station, a mobile station, a mobile console, a remote station, a remote terminal, a mobile device, a user terminal, a terminal, a wireless communication device, a user agent, a user apparatus, or the like.

The network device involved in embodiments of this application includes a base station deployed in a radio access network (radio access network, RAN), a core network device deployed in a 5G core network, and an IMS device deployed in an IP multimedia subsystem (IP multimedia subsystem, IMS) network. The base station includes but is not limited to a next generation nodeB (the next generation nodeB, gNB) in a 5G system.

The 5G core network is mainly responsible for services such as user access control, mobility management, session management, user security authentication, and charging. The 5G core network includes a plurality of functional units, and may be divided into two functional entities: a 5G control plane and a 5G data plane.

The 5G control plane includes an access and mobility management function network element (access and mobility management function, AMF) and a session management function network element (session management function, SMF). The AMF is responsible for user access management, security authentication, and mobility management. The SMF is responsible for interacting with the separated 5G data plane, creating, updating, and deleting a protocol data unit (PDU) session, and managing an environment of a session with the PDU.

The 5G data plane includes a user plane network element (UPF) and a data network. The UPF is responsible for functions such as interacting with the data network, managing transmission of user plane data, traffic statistics, and security eavesdropping. The data network may provide massive and diverse data for the UPD.

Network elements in the 5G core network are collectively referred to as a core network device in embodiments of this application.

The IMS network includes at least one of an access-session border controller (access-session border controller, A-SBC), a proxy-call session control function network element (proxy-call session control function, P-CSCF), an interrogating-call session control function network element (interrogating-call session control function, I-CSCF), a serving-call session control function network element (serving-call session control function, S-CSCF), or a multimedia telephony service application server (multimedia telephony service application server, MMTEL AS).

The network elements related to processing the call service in the IMS network are collectively referred to as an IMS device in embodiments of this application.

It should be understood that, in embodiments of this application, the network device may be an apparatus configured to implement a function of the network device, or may be an apparatus, for example, a chip system, that can support the network device to implement the function. The apparatus may be installed in the network device. It should be understood that all or some of functions of the network device in this application may also be implemented by software functions running on hardware, or by virtualization functions instantiated on a platform (for example, a cloud platform).

It should be further understood that the network device and the terminal device in embodiments of this application may be deployed on land, including indoor, outdoor, handheld, or vehicle-mounted; or deployed on water; or deployed on an airplane, a balloon, or a satellite in the air. Application scenarios of the network device and the terminal device are not limited in embodiments of this application.

The technical solutions of embodiments of this application may be applied to various communication systems, for example, a 5th generation (5th generation, 5G) system, a future evolved communication system, or vehicle to everything (vehicle-to-X, V2X), where the V2X may include vehicle to network (vehicle to network, V2N), vehicle to vehicle (vehicle to vehicle, V2V), vehicle to infrastructure (vehicle to infrastructure, V2I), vehicle to pedestrian (vehicle to pedestrian, V2P), long term evolution-vehicle (long term evolution-vehicle, LTE-V), Internet of Vehicles, machine type communication (machine type communication, MTC), Internet of Things (Internet of things, IoT), long term evolution-machine (long term evolution-machine, LTE-M), machine to machine (machine to machine, M2M), device to device (device to device, D2D), and the like.

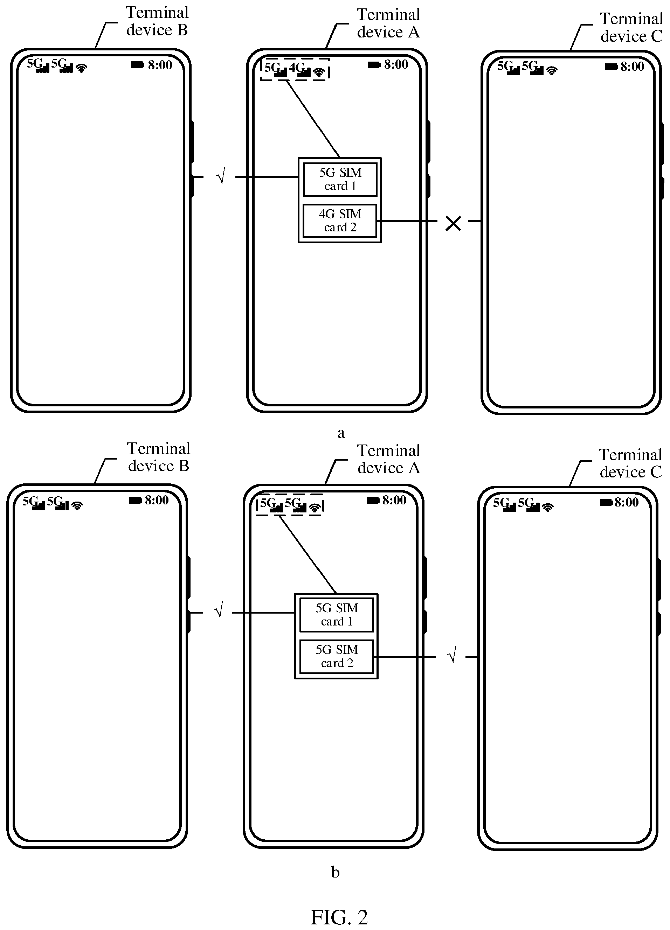

FIG. 2 is a schematic diagram of a communication scenario according to an embodiment of this application. The communication scenario shown in FIG. 2 shows a terminal device A, a terminal device B, and a terminal device C. The terminal device A is installed with a SIM card 1 and a SIM card 2, and supports a dual-SIM dual-standby mode. The terminal device B and the terminal device C may be installed with one or more SIM cards. This is not limited in embodiments of this application.

The terminal device A supports a dual-SIM dual-standby mode, including supporting dual-SIM single-active or dual-SIM dual-active.

Optionally, if the terminal device A supports dual-5G dual-SIM dual-active, when the SIM card 1 is registered on a 5G network and the SIM card 2 is registered on a 5G network, the terminal device A has a dual-SIM dual-active function; or if at least one of the SIM card 1 and the SIM card 2 is not registered on the 5G network, the terminal device A does not have the dual-SIM dual-active function.

Optionally, if the terminal device A supports dual-5G+4G dual-SIM dual-active, when either of the SIM card 1 and the SIM card 2 is registered on a 5G network, and the other is registered on a 4G network or a 5G network, the terminal device A has the dual-SIM dual-active function; or when both the SIM card 1 and the SIM card 2 are registered on the 4G network, the terminal device A does not have the dual-SIM dual-active function.

An example in which the terminal device A has the dual-SIM dual-active function when the SIM card 1 is registered on the 5G network and the SIM card 2 is registered on the 5G network, and the terminal device A has a dual-SIM single-active function when at least one of the SIM card 1 and the SIM card 2 is registered on the 4G network is used for description in embodiments of this application.

As shown in a in FIG. 2, a SIM card 1 of the terminal device A is registered on a 5G network, and a SIM card 2 of the terminal device A is registered on a 4G network. In this case, the terminal device A has the dual-SIM single-active function. Therefore, when the terminal device A is performing a voice over new radio (voice over new radio, VoNR) call with the terminal device B by using the SIM card 1, the SIM card 2 is in a state of unable to be connected temporarily. If the terminal device C makes a call to the SIM card 2 of the terminal device A at this time, the terminal device A cannot receive an incoming call of the terminal device C, and the terminal device A cannot communicate with the terminal device C. A reason of the foregoing problem is that, for the terminal device A supporting dual-SIM single-active, two SIM cards share one set of radio frequency resources. When the SIM card 1 is in a calling state, the SIM card 1 occupies all the radio frequency resources, while the SIM card 2 has no radio frequency resource available, and therefore, can only be temporarily in a network disconnection state, and cannot call or be called.

As shown in b in FIG. 2, a SIM card 1 of the terminal device A is registered on a 5G network, and a SIM card 2 of the terminal device A is registered on a 5G network. In this case, the terminal device A has the dual-SIM dual-active function. Therefore, when the terminal device A is performing a VoNR call with the terminal device B by using the SIM card 1, if the terminal device C makes a call to the SIM card 2 of the terminal device A at this time, the terminal device A can receive an incoming call of the terminal device C by using the SIM card 2, and the terminal device A and the terminal device C can normally communicate.

An example in which the terminal device A in FIG. 2 has the dual-SIM dual-active function is used. In a possible scenario, when the terminal device A is performing a VoNR call with the terminal device B by using the SIM card 1, the terminal device A receives an incoming call from the terminal device C by using the SIM card 2 at this time. In this case, if the terminal device A switches the SIM card 1 and/or the SIM card 2 from the 5G network to the 4G network based on an instruction of a base station, the terminal device A falls back from dual-SIM dual-active to dual-SIM single-active.

When the terminal device has the dual-SIM single-active function, because the SIM card 1 is performing a call, the SIM card 2 cannot use a data service and cannot call or be called, and therefore, the terminal device A actively hangs up an incoming call of the SIM card 2.

However, because the SIM card 1 is occupying radio frequency resources for the call, the terminal device A hangs up the incoming call of the SIM card 2 only locally, and a message of hanging up the incoming call of the SIM card 2 cannot be sent to an IMS device. In this way, session statuses between the terminal device A and the IMS device are not synchronous, and the IMS device considers that the SIM card 2 is still performing the call service. Consequently, the SIM card 2 cannot call or be called subsequently.

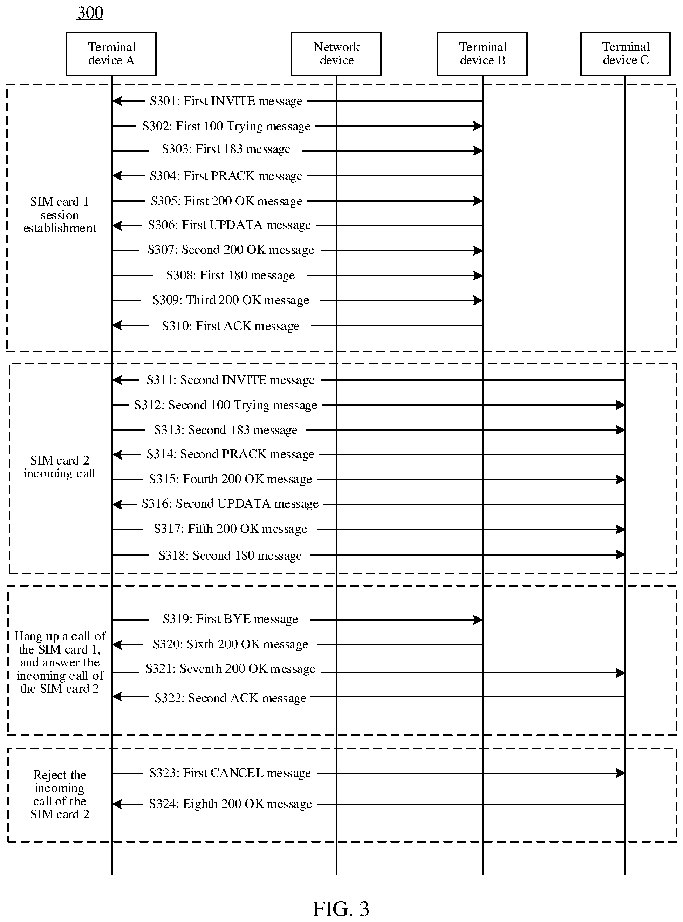

FIG. 3 is a schematic flowchart of a call method 300 according to an embodiment of this application. As shown in FIG. 3, the method 300 describes a calling procedure and a hang-up procedure of an SIP session. With reference to FIG. 2, the method 300 is interactively performed by the terminal device A, the terminal device B, the terminal device C, and the network device in FIG. 2. The network device includes a base station, a core network device, and an IMS device (not shown in FIG. 3). The terminal device A transfers SIP messages to the terminal device B/the terminal device C through the base station, the core network device, and the IMS device.

The terminal device A is provided with a SIM card 1 and a SIM card 2, the SIM card 1 is registered on a first network, and the SIM card 2 is registered on a second network. This embodiment of this application is described by using an example in which the terminal device A has a dual-SIM dual-active function when the first network is a 5G network and the second network is a 5G network.

The method 300 includes S301 to S324, and the specific steps are as follows.

S301: The terminal device B sends a first INVITE message to the terminal device A through the network device, where the first INVITE message is for requesting to start a session. Correspondingly, the terminal device A receives the first INVITE message.

S302: The terminal device A sends a first 100 Trying message to the terminal device B through the network device, where the first 100 Trying message indicates that the first INVITE message has been received and indicating to stop retransmission of the INVITE message. Correspondingly, the terminal device B receives the first 100 Trying message.

S303: The terminal device A sends a first 183 (session_progress) message to the terminal device B through the network device, where the first 183 message indicates that a call is in progress. Correspondingly, the terminal device B receives the first 183 message.

S304: The terminal device B sends a first PRACK message to the terminal device A through the network device, where the first PRACK message is for ensuring reliable transmission of temporary messages (including 101 to 199, for example, the foregoing first 183 message). If the first PRACK message is not received, the temporary message is retransmitted. Correspondingly, the terminal device A receives the first PRACK message.

S305: The terminal device A sends a first 200 OK message to the terminal device B through the network device, where the first 200 OK message is a response to the first INVITE message, and the messages transmitted in the foregoing S301 to S304 carry content of a session description protocol (session description protocol, SDP). For example, the first INVITE message includes information such as an address of a caller and an address of a callee, a call subject, and a call priority. The terminal device A sends the first 200 OK message, which indicates that exchange of the content of the SDP is completed. Correspondingly, the terminal device B receives the first 200 OK message.

S306: The terminal device B sends a first UPDATA message to the terminal device A through the network device, where the first UPDATA message is for updating a media stream status. Correspondingly, the terminal device A receives the first UPDATA message.

S307: The terminal device A sends a second 200 OK message to the terminal device B through the network device, where the second 200 OK message is a response to the first UPDATA message and indicates that the media stream status has been updated. Correspondingly, the terminal device B receives the first 200 OK message.

S308: The terminal device A sends a first 180 (Ringing) message to the terminal device B through the network device, where the first 180 message indicates that a called party has ringed. Correspondingly, the terminal device B receives the first 180 message.

S309: The terminal device A sends a third 200 OK message to the terminal device B through the network device, where the third 200 OK message indicates that the called party (the terminal device A) has answered the incoming call. Correspondingly, the terminal device B receives the third 200 OK message.

S310: The terminal device B sends an ACK message to the terminal device A through the network device, where the first ACK message indicates that session establishment is completed. Correspondingly, the terminal device A receives the first ACK message.

S301 to S310 above describe a complete session procedure by using an example in which the terminal device B makes a call to the SIM card 1 of the terminal device A, and the terminal device A answers the call. After S310, the terminal device A and the terminal device B may transmit call data.

In a process in which the terminal device B calls the terminal device A through the SIM card 1, the terminal device C makes a call to the SIM card 2 of the terminal device A. A procedure (S311 to S318) in which the terminal device C calls the terminal device A is similar to the procedure (S301 to S308) in which the terminal device B calls the terminal device A, and details are not described herein again.

When the SIM card 1 is in a calling state and the SIM card 2 is in a call incoming state, in response to a user operation, the terminal device A may hang up the call of the SIM card 1 and answer the incoming call of the SIM card 2, or reject the incoming call of the SIM card 2.

The following S319 to S322 describe a process of hanging up the call of the SIM card 1 and answering the call of the SIM card 2, and S323 to S324 describe a process of rejecting the call of the SIM card 2.

S319: The terminal device A sends a first BYE message to the terminal device B through the network device, where the first BYE message is for terminating an established call. Correspondingly, the terminal device B receives the first BYE message.

In this step, the terminal device A sends the first BYE message to the terminal device B in response to an operation of the user of hanging up the call of the SIM card 1.

S320: The terminal device B sends a sixth 200 OK message to the terminal device A through the network device, where the sixth 200 OK message is a response to the first BYE message, and indicates that the first BYE message has been received.

S321: The terminal device A sends a seventh 200 OK message to the terminal device C through the network device, where the seventh 200 OK message indicates that the called party (the terminal device A) has answered the incoming call. Correspondingly, the terminal device C receives the seventh 200 OK message.

In this step, the terminal device A sends the seventh 200 OK message to the terminal device C in response to an operation of the user of answering the incoming call of the SIM card 2.

S322: The terminal device C sends a second ACK message to the terminal device A through the network device, where the second ACK message indicates that session establishment is completed. Correspondingly, the terminal device A receives the second ACK message.

S323: The terminal device A sends a first CANCEL message to the terminal device C through the network device, where the first CANCEL message is for terminating a session that is not established yet. Correspondingly, the terminal device C receives the first CANCEL message.

S324: The terminal device C sends an eighth 200 OK message to the terminal device A through the network device, where the eighth 200 OK message is a response to the first CANCEL message, and indicates that session establishment has been canceled.

In the foregoing S323 to S324, the terminal device A may send the first CANCEL message to the network device to reject an incoming call from the terminal device C to the SIM card 2 of the terminal device A. Correspondingly, the network device may receive the first CANCEL message and send an eighth 200 OK message to terminal device A to confirm that session establishment has been canceled.

However, if the terminal device A switches the SIM card 1 and/or the SIM card 2 from a 5G network to a 4G network when the SIM card 1 is in the calling state and the SIM card 2 is in a call incoming state, the terminal device A no longer has the dual-SIM dual-active function. Therefore, the terminal device A actively hangs up the incoming call of the SIM card 2. In this case, the CANCEL message indicating that the terminal device A hangs up the incoming call of the SIM card 2 cannot be sent to the network device, and the network device cannot synchronize a session status of the SIM card 2.

It should be understood that, in the method 300, the first INVITE message and the second INVITE message are messages of a same type, but are not a same message. Similarly, the first 100 Trying message and the second 100 Trying message are messages of a same type, but are not a same message. The first 183 message and the second 183 message are messages of a same type, but are not a same message. The first PRACK message and the second PRACK message are messages of a same type, but are not a same message. The first 200 OK to the eighth 200 OK are messages of a same type, but are not a same message. The first UPDATE message and the second UPDATE message are messages of a same type, but are not a same message. The first 180 messages and the second 180 messages are messages of a same type, but are not a same message. The first ACK message and the second ACK message are messages of a same type, but are not a same message.

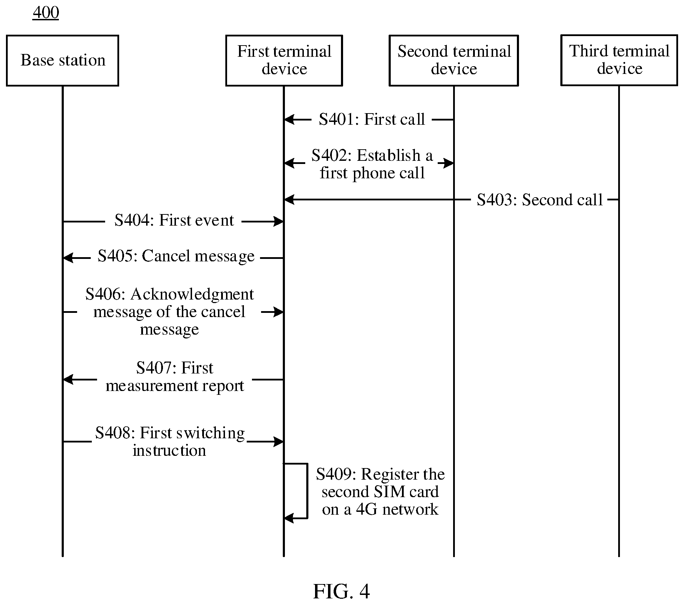

FIG. 4 is a schematic flowchart of a data transmission method 400 according to an embodiment of this application. The method 400 is applied to a communication system including a first terminal device, a second terminal device, a third terminal device, and a base station. The first terminal device is provided with a first SIM card and a second SIM card, the first SIM card is registered on a first network, and the second SIM card is registered on a second network.

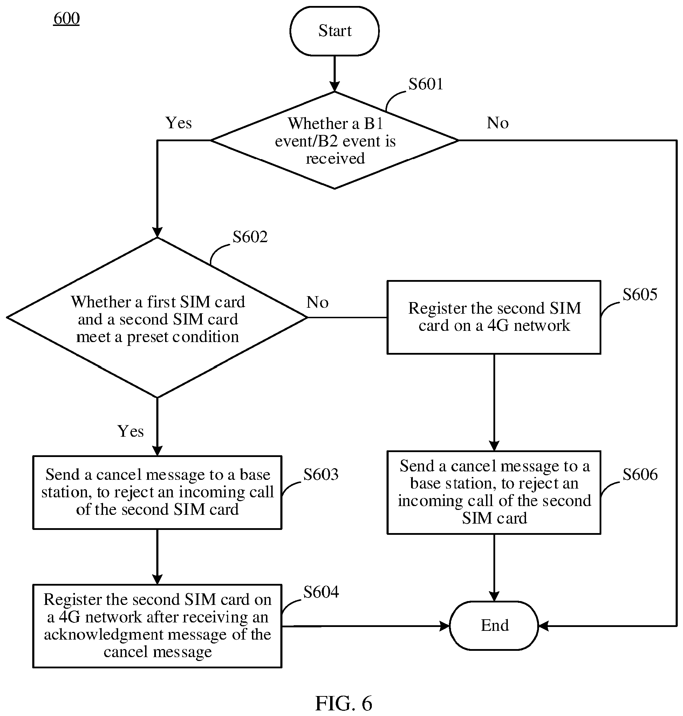

With reference to FIG. 3 and FIG. 6, the method 400 shows a process in which the first terminal device performs network switching in a scenario in which the first terminal device receives an incoming call from the third terminal device during a call with the second terminal device. For specific descriptions, refer to S401 to S409.

In this embodiment of this application, when the first SIM card is registered on the first network and the second SIM card is registered on the second network, the first terminal device has a dual-SIM dual-active function. The first network and the second network may be the same or may be different. This embodiment of this application is described by using an example in which the first terminal device has the dual-SIM dual-active function when the first network and the second network are the same.

It should be understood that, that the first network and the second network are the same means that communication systems are the same, and the communication systems include 5G, 4G, and the like. For example, the first network and the second network are both 5G networks.

It should be understood that, different operators may use same or different network standards for a same communication system. For example, a 4G network standard of a first operator is time division long term evolution (time division long term evolution, TDMA), and a 4G network standard of a second operator is time division long term evolution and frequency division long term evolution (time division long term evolution and frequency division long term evolution, TDD-LTE&FDD-LTE). For another example, a 5G network standard of the first operator and the second operator is global unified 5G new radio (NR).

The method 400 includes S401 to S409, and specific steps are as follows.

S401: The second terminal device sends a first call to the first terminal device. Correspondingly, the first terminal device receives the first call.

For example, the first terminal device may be the terminal device A shown in b in FIG. 2 or the terminal device A in FIG. 3, the first SIM card may be the SIM card 1 of the terminal device A, and the second SIM card may be the SIM card 2 of the terminal device A. The first network and the second network are 5G networks. For example, the second terminal device may be the terminal device B shown in b in FIG. 2 or the terminal device B in FIG. 3.

For example, when the first SIM card and the second SIM card of the first terminal device are registered on the 5G network, the first terminal device has the dual-SIM dual-active function.

With reference to the descriptions of the foregoing method 300, the first terminal device and the second terminal device may communicate with each other by using the base station, a core network device, and an IMS device. The first call may be the first INVITE message in S301. After receiving the first call, the first terminal device may interact with the second terminal device to perform S302 to S308.

S402: The first terminal device establishes a first phone call with the second terminal device in response to an operation of a user of answering the first call on the first terminal device.

With reference to the descriptions of the foregoing method 300, the first terminal device starts to ring after S307, and in S308, it is indicated to the second terminal device that the called party has ringed. After ringing, in response to an operation of the user, the first terminal device answers the incoming call from the second terminal device, and interacts with the second terminal device to perform S309 and S310, to establish the first phone call.

S403: The third terminal device sends a second call to the first terminal device during the first phone call. Correspondingly, the first terminal device receives the second call, and the first call and the second call respectively call a number of the first SIM card and a number of the second SIM card.

With reference to the example in S401, the first terminal device has the dual-SIM dual-active function. Therefore, during the phone call with the second terminal device, the first terminal device may receive the second call from the third terminal device. For example, the third terminal device may be the terminal device C shown in b in FIG. 2 or the terminal device C in FIG. 3.

With reference to the descriptions of the foregoing method 300, the first terminal device and the third terminal device may communicate with each other by using the base station, a core network device, and an IMS device. The second call may be the second INVITE message in S311. After receiving the second call, the first terminal device may interact with the third terminal device to perform S312 to S318.

In a possible scenario, the second terminal device may call the number of the first SIM card or the number of the second SIM card of the first terminal device, and the third terminal device may also call the number of the first SIM card or the number of the second SIM card of the first terminal device.

For example, the second terminal device calls the number of the first SIM card of the first terminal device. If the third terminal device calls the first SIM card of the first terminal device, the third terminal device cannot successfully call the first terminal device, and the third terminal device prompts the user that the dialed number is in a phone call; or if the third terminal device calls the second SIM card of the first terminal device, the third terminal device can successfully call the first terminal device.

This embodiment of this application provides descriptions by using an example in which the second terminal device calls the number of the first SIM card of the first terminal device, and the third terminal device calls the number of the second SIM card of the first terminal device.

Calling a number of a SIM card means calling a phone number corresponding to the SIM card.

S404: The base station sends a first event to the first terminal device. Correspondingly, the first terminal device receives the first event.

The first event is an inter-system measurement event, and indicates the first terminal device to measure signal quality of an inter-system cell adjacent to a serving cell of the first terminal device. The inter-system cell and the serving cell of the first terminal device belong to different communication systems. For example, the serving cell of the first terminal device is a 5G cell, and the inter-system cell is a 4G cell. The inter-system cell adjacent to the serving cell of the first terminal device may be referred to as an inter-system neighbor cell.

It should be understood that, the first terminal device may be in a moving environment, and during moving of the first terminal device, there may be a case in which the base station indicates the first terminal device to perform network switching.

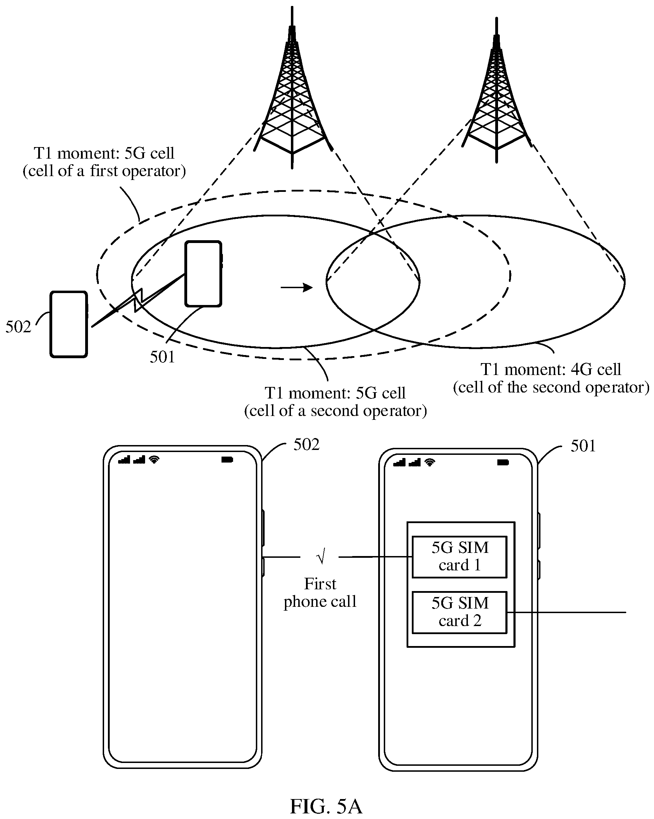

With reference to the example in S401, FIG. 5A to FIG. 5C are a schematic diagram of network switching according to an embodiment of this application. For example, if the first SIM card is a SIM card of a first operator, and the second SIM card is a SIM card of a second operator, the first SIM card is registered on a network of the first operator, and the second SIM card is registered on a network of the second operator. The first operator is the same as or different from the second operator. This embodiment of this application provides descriptions by using an example in which the first operator and the second operator are different.

As shown in FIG. 5A, a first terminal device 501 is located in an overlapping area of a 5G cell of the first operator and a 5G cell of the second operator. A first SIM card and a second SIM card of the first terminal device 501 are registered on the 5G network. The first terminal device 501 may call or be called by using the first SIM card, and the first terminal device 501 may also call or be called by using the second SIM card. For example, at a moment T1, a first phone call is established between the first terminal device 501 and a second terminal device 502 by using the first SIM card. The second SIM card is in an unoccupied state, and can normally receive a call from another terminal device. With movement of the first terminal device 501, a location of the first terminal device 501 constantly changes.

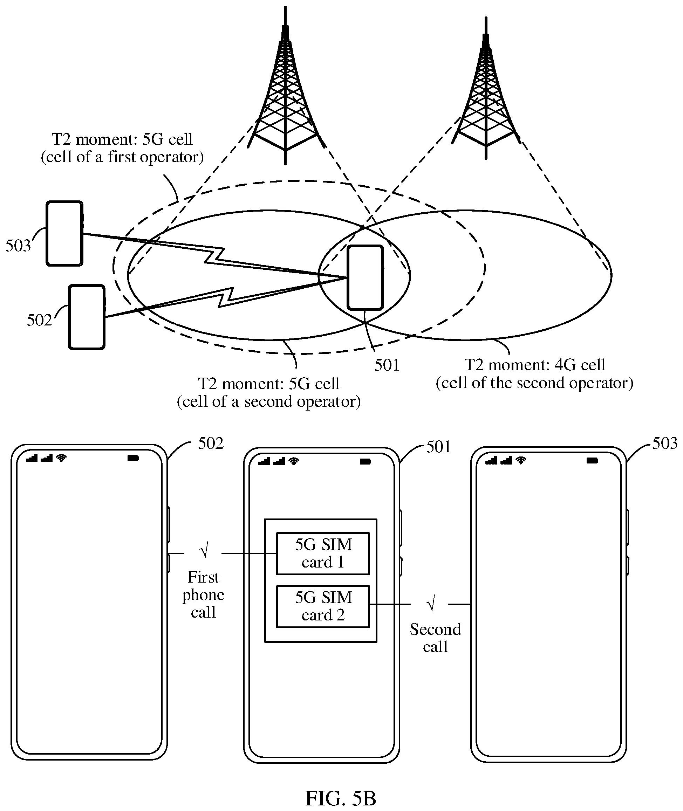

As shown in FIG. 5B, at a moment T2, the first terminal device 501 moves to an edge location of the 5G cell of the second operator. The edge location is in an overlapping area of the 5G cell of the second operator and a 4G cell of the second operator. In this case, the first terminal device 501 is performing the first phone call with the second terminal device 502 by using the first SIM card, and receives a second call from a third terminal device 503 by using the second SIM card.

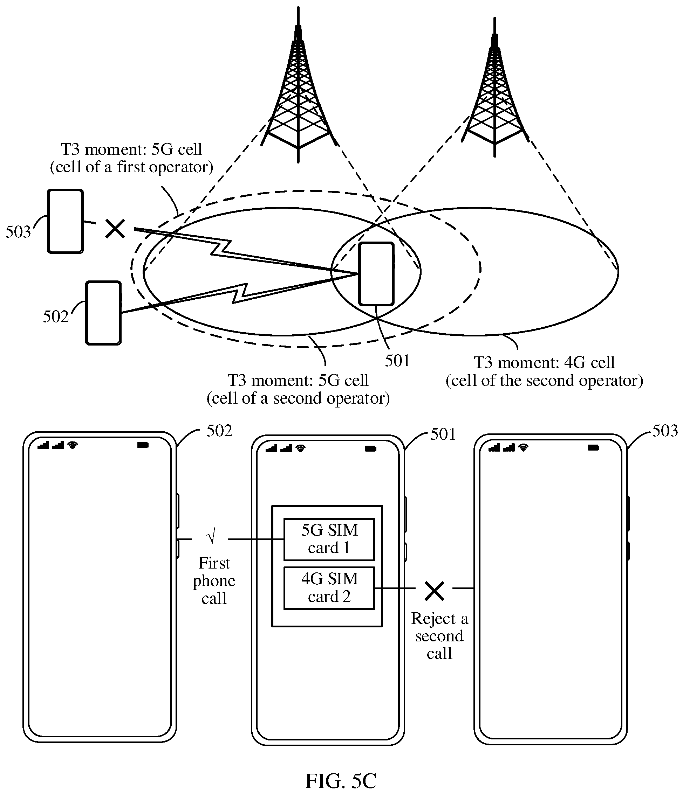

As shown in FIG. 5C, after the first terminal device 501 moves to the overlapping area of the 5G cell of the second operator and the 4G cell of the second operator, the base station may send a first event to the first terminal device 501, to indicate the first terminal device 501 to perform inter-system measurement, to measure signal quality of the 4G cell of the second operator adjacent to the 5G cell of the second operator. For example, the first terminal device 501 rejects the second call of the third terminal device 503 at a moment T3 after receiving the first event, and switches a network of the second SIM card from the 5G network of the second operator to the 4G network of the second operator based on an indication of the base station. After the second SIM card is switched from the 5G network of the second operator to the 4G network of the second operator, the first SIM card is still a SIM card registered on the 5G network of the first operator, and the second SIM card becomes a SIM card registered on the 4G network of the second operator. In this case, the first terminal device 501 no longer has the dual-SIM dual-active function.

It should be understood that after the first terminal device 501 receives the first event, the second call has not been answered yet. When the first terminal device 501 no longer has the dual-SIM dual-active function, the first terminal device 501 cannot answer the second call, and actively hangs up the second call.

Optionally, the first event is a B1 event. After receiving the B1 event, the first terminal device measures the signal quality of the inter-system neighbor cell of the serving cell of the first terminal device based on the B1 event, and determines whether a reporting condition of a measurement report of the B1 event is met. The determining whether a reporting condition of a measurement report of the B1 event is met includes: If the signal quality of the inter-system neighbor cell of the current serving cell of the first terminal device is higher than a first threshold, the first terminal device needs to report the measurement report of the B1 event to the base station; if the signal quality of the inter-system neighbor cell of the current serving cell of the first terminal device is lower than the first threshold, the first terminal device does not report the measurement report of the B1 event to the base station.

Optionally, the first event is a B2 event. After receiving the B1 event, the first terminal device measures signal quality of the serving cell of the first terminal device and signal quality of the inter-system neighbor cell of the serving cell based on the B2 event, and determines whether a reporting condition of a measurement report of the B2 event is met. The determining whether a reporting condition of a measurement report of the B2 event is met includes: If the signal quality of the current serving cell of the first terminal device is lower than a second threshold, and the signal quality of the inter-system neighbor cell of the current serving cell of the first terminal device is higher than a third threshold, the first terminal device needs to report the measurement report of the B2 event to the base station; if the signal quality of the current serving cell of the first terminal device is higher than the second threshold, and/or the signal quality of the inter-system neighbor cell of the current serving cell of the first terminal device is lower than the third threshold, the first terminal device does not report the measurement report of the B2 event to the base station.

Optionally, the base station may send the B1 event/B2 event by using an RRC message. Optionally, the RRC message may carry a threshold of the B1 event/B2 event.

The measurement report of the B1 event/B2 event includes signal quality, for example, RSRP, RSRQ, and SINR, of the inter-system neighbor cell of the first terminal device. Optionally, the measurement report further includes at least one of the following: a physical cell identity (physical cell identity, PCI), a downlink frequency (downlink frequency), an uplink frequency (uplink frequency), a downlink bandwidth (downlink bandwidth), an uplink frequency (uplink bandwidth), a cell identity (cell identity, CI), a tracking area code (tracking area code, TAC), a frequency band indication (frequency band indication), a mobile country number (mobile country number, MCC), a mobile network number (mobile network number, MNC), or a number of MNC digits (number of MNC digits) of the inter-system neighbor cell.

With reference to the descriptions in FIG. 6, in an optional embodiment, when the first terminal device determines that the measurement report of the B1 event/B2 event needs to be reported to the base station, the first terminal device may perform S602: Determine whether the first SIM card and the second SIM card meet a preset condition. The preset condition at least includes: A first network on which the first SIM card is registered and a second network on which the second SIM card is registered are 5G networks, and the first SIM card and the second SIM card are in an occupied state, where the occupied state includes a calling state or a call incoming state. In the example in this embodiment of this application, the first SIM card is registered on a 5G network, the second SIM card is registered on a 5G network, the first terminal device is performing the first phone call with the second terminal device by using the first SIM card, and the first terminal device is receiving the second call from the third terminal device by using the second SIM card. Therefore, the first SIM card is in the calling state and the second SIM card is in the call incoming state, and the preset condition is met.

For example, the first terminal device may determine the states of the first SIM card and the second SIM card by checking used flag bits of the first SIM card and the second SIM card. For example, used flag bits of the first SIM card and the second SIM card are both "1", indicating that both the first SIM card and the second SIM card have ongoing services (or are occupied). The services include being in a call, making a call, and receiving an incoming call. For another example, the used flag bit of the first SIM card is "0", indicating that the first SIM card is in an idle state.

That the first SIM card and the second SIM card do not meet the preset condition includes the following cases.

Case 1: The first SIM card and/or the second SIM card are not SIM cards registered on the 5G network. For example, the first SIM card is a SIM card registered on a 5G network, and the second SIM card is a SIM card registered on a 4G network. In this case, the first terminal device does not have the dual-SIM dual-active function, and has a dual-SIM single-active function. Therefore, when the first SIM card is in the calling state, the second SIM card cannot receive an incoming call of another terminal device.

Case 2: The first SIM card and the second SIM card are SIM cards registered on the 5G network, but at least one of the first SIM card and the second SIM card is in the idle state. For example, the first SIM card is in the calling state, and the second SIM card is in the idle state. In this case, the first terminal device has the dual-SIM dual-active function. However, because no other terminal device sends an incoming call to the second SIM card, there is no problem of hanging up the incoming call of the second SIM card, in other words, there is no problem that the incoming call of the second SIM card cannot be notified to the IMS device.

Case 3: The first SIM card and/or the second SIM card are not SIM cards registered on the 5G network, and at least one of the first SIM card and the second SIM card is in the idle state. Case 3 is a combination of Case 1 and Case 2, and details are not described herein again.

If the first terminal device determines that the preset condition is met, it indicates that a dual-SIM dual-active mode supported by the first terminal device is dual-5G dual-SIM dual-active. After at least one SIM card of the first terminal device is switched to be registered on the 4G network, the first terminal device no longer has the dual-SIM dual-active function. Therefore, the first terminal device needs to perform S407 to perform network switching after S405 and S406. In this way, when the first terminal device has the dual-SIM dual-active function, the message indicating that the second call for the second SIM card is rejected is sent to a network side, to synchronize a session status of the second SIM card with the network side.

Optionally, before the base station sends the first event to the first terminal device, the base station sends a third event to the first terminal device, where the third event indicates to measure the signal quality of the serving cell of the first terminal device. The first terminal device reports a third measurement report to the base station when a reporting condition of a measurement report of the third event is met.

For example, the third event includes an A2 event, and the third measurement report is a measurement report of the A2 event. After receiving the A2 event, the first terminal device measures the signal quality of the current serving cell of the first terminal device, and determines whether a reporting condition of the measurement report of the A2 event is met. The determining whether a reporting condition of the measurement report of the A2 event is met includes: If the signal quality of the current serving cell of the first terminal device is lower than a fourth threshold, the first terminal device needs to report the measurement report of the A2 event to the base station; if the signal quality of the current serving cell of the first terminal device is higher than the fourth threshold, the first terminal device does not report the measurement report of the A2 event to the base station.

Optionally, before the base station sends the A2 event to the first terminal device, the base station sends an event to the first terminal device. After receiving the A1 event, the first terminal device measures the signal quality of the current serving cell of the first terminal device, and determines whether a reporting condition of a measurement report of the event is met. If the signal quality of the current serving cell of the first terminal device is higher than a fifth threshold, the first terminal device needs to report the measurement report of the event A1 to the base station, and after receiving the measurement report of the event A1, the base station stops inter-frequency/inter-system measurement; or if the signal quality of the current serving cell of the first terminal device is lower than the fifth threshold, the first terminal device does not report the measurement report of the event A1 to the base station, and when not receiving the measurement report of the event A1, the base station sends the event A2 to the first terminal device, to indicate the first terminal device to continue to measure whether the signal quality of the current serving cell is lower than the fourth threshold.

S405: The first terminal device sends a cancel message to the base station, to reject the second call. Correspondingly, the base station receives the cancel message.

With reference to the descriptions in FIG. 6, in an optional embodiment, the first terminal device sends the cancel message to the base station when the first SIM card and the second SIM card meet the preset condition, to reject the second call, that is, performs S603 in the method 600. The second call is a call from the third terminal device to the second SIM card of the first terminal device.

With reference to the descriptions of the foregoing method 300, the cancel message in this step may be the first CANCEL in S323, and is for terminating a session that is not established yet, in other words, rejecting the second call from the third terminal device in this embodiment of this application.

In this step, after receiving the first event, the first terminal device sends the cancel message to the base station when having the dual-SIM dual-active function, so that the cancel message can be normally sent to the base station. It should be understood that, after receiving the cancel message, the base station sends the cancel message to the IMS device through the core network device. In this way, the IMS device synchronizes the session status of the second SIM card to an unoccupied state. Then, when another terminal device calls the number of the second SIM card of the first terminal device, the first terminal device can normally receive an incoming call by using the second SIM card. Alternatively, the first terminal device may normally call another terminal device by using the second SIM card.

S406: The base station sends an acknowledgment message of the cancel message to the first terminal device. Correspondingly, the first terminal device receives the acknowledgment message of the cancel message.

With reference to the descriptions of the foregoing method 300, the acknowledgment message of the cancel message in this step may be the eighth 200 OK message in S324, and indicates that session establishment is canceled, in other words, establishment of a session between the first terminal device and the third terminal device is canceled in this embodiment of this application.

In this step, after receiving the acknowledgment message of the cancel message transparently transmitted by the IMS device through the core network device, the base station sends the acknowledgment message of the cancel message to the first terminal device.

S407: The first terminal device sends a first measurement report to the base station. Correspondingly, the base station receives the first measurement report.

In this step, the first measurement report is a measurement report for the first event. With reference to the descriptions in S404, after receiving the first event, the first terminal device measures the signal quality of the inter-system neighbor cell of the current serving cell of the first terminal device, and then reports the first measurement report to the base station when the reporting condition of the measurement report of the first event is met.

It should be noted that the first terminal device sends the first measurement report to the base station after receiving the acknowledgment message of the cancel message (that is, S407 is performed after S406). With reference to the descriptions in the method 600, S407 may be performed and before registering the second SIM card on the 4G network after receiving the acknowledgment message of the cancel message in S604.

S408: The base station sends a first switching instruction to the first terminal device, where the first switching instruction instructs the first terminal device to register the second SIM card on a third network, and network standards of the third network and the second network are different. Correspondingly, the first terminal device receives the first switching instruction.

In this step, after receiving the first measurement report reported by the first terminal device, the base station sends the first switching instruction to the first terminal device. For example, a network standard of the second network is a 5G NR standard, and a network standard of the third network is a 4G TDD-LTE standard.

S409: The first terminal device registers the second SIM card on the third network.

In this step, the first terminal device registers the second SIM card on the third network, and the third network is different from the first network. It may be understood as that, communication systems of the third network and the first network are different, for example, the first network is a 5G network, and the third network is a 4G network.

With reference to the descriptions in the method 600, this step may be performed after S603, that is, corresponding to registering the second SIM card on the 4G network in S604.

After this step, the first SIM card of the first terminal device is registered on the first network, the second SIM card is registered on the third network, and the first network and the third network are different. When the first network and the second network are different, the first terminal device no longer has the dual-SIM dual-active function, but has a dual-SIM single-active function.

Based on the technical solutions of this application, when the first SIM card in the two SIM cards of the first terminal device is in a call and the second SIM card receives an incoming call, if the first terminal device receives the first event of the base station, the first terminal device first sends a message indicating to reject the incoming call to the base station, after receiving an acknowledgment message of the message indicating to reject the incoming call from the network side, the first terminal device sends the first measurement report to the base station, and further performs network switching based on an indication of the base station, and after the network switching, the first terminal device falls back from dual-SIM dual-active to dual-SIM single-active. Therefore, when sending the message indicating to reject an incoming call, the first terminal device still has the dual-SIM dual-active function, and the message indicating to reject an incoming call may be sent to the network side. In this way, the network side can synchronize the session status of the second SIM card to the unoccupied state, thereby helping avoid a problem that the second SIM card cannot call or be called subsequently.

Optionally, the method 400 further includes: After the call on the first SIM card is hung up, in response to a user operation, the first terminal device makes a call with the second terminal device by using the second SIM card.

In this embodiment of this application, when the first terminal device does not re-register a network, the first terminal device may make a call with another terminal device in response to a user operation. The user operation may be an operation of making a call. After the first SIM card is hung up, the first terminal device may make a call with the second terminal device by using the second SIM card. The user operation may alternatively be an operation of answering an incoming call. The first terminal device may answer an incoming call from the second terminal device by using the second SIM card after the first SIM card is hung up.

FIG. 6 is a schematic flowchart of another data transmission method 600 according to an embodiment of this application. Steps of the method 600 are performed by a first terminal device. The first terminal device is provided with a first SIM card and a second SIM card. If the first terminal device supports only dual-5G dual-SIM dual-active, when the first SIM card and the second SIM card are registered on 5G networks, the first terminal device has a dual-SIM dual-active function; otherwise, the first terminal device does not have the dual-SIM dual-active function. For example, when the first terminal device has the dual-SIM dual-active function, the first terminal device may make a call with another terminal device by using the first SIM card. During the call, the first terminal device receives an incoming call from the another terminal device by using the second SIM card, and at this time, the incoming call is not answered yet.

Optionally, with reference to S401 to S409 in FIG. 4, the method 600 shows internal determining logic of switching a network standard by the first terminal device after receiving a B1 event/B2 event in a scenario in which the first terminal device is in a call by using the first SIM card and receives an incoming call by using the second SIM card. It should be noted that the method 600 does not depend on the method in FIG. 4. For ease of understanding in this embodiment, the method 600 is merely described in combination with the method shown in FIG. 4. The method 600 may be independently performed. The method 600 includes S601 to S606, and specific steps are as follows.

S601: Determine whether a B1 event/B2 event sent by the base station is received. If yes, perform step S602; if not, the procedure ends.

For the B1 event/B2 event, refer to the descriptions for S404, and details are not described herein again.

S602: Determine whether the first SIM card and the second SIM card meet a preset condition. The preset condition at least includes: The first SIM card and the second SIM card are in an occupied state are SIM cards registered on 5G networks, and the first SIM card and the second SIM card are in an occupied state, where the occupied state includes a calling state or a call incoming state. If yes, perform S603 and S604, where S603 is performed before S604; if not, perform S605 and S606, where S605 is performed before S606.

S603: Send a cancel message to the base station, to reject an incoming call of the second SIM card.

It should be understood that, in this case, the first SIM card and the second SIM card of the first terminal device are still registered on the 5G networks, and the first terminal device still has the dual-SIM dual-active function. Therefore, the first terminal device can normally send a hang up message to the network side. The network side includes the base station, a core network device, and an IMS device. After receiving the hang up message, the base station may send the hang up message to the IMS device via the core network device. In this way, the IMS device can synchronize the session status of the second SIM card.

S604: Register the second SIM card on a 4G network after receiving an acknowledgment message of the cancel message. After the first terminal device registers the second SIM card on the 4G network, the first terminal device no longer has the dual-SIM dual-active function.

S605: Register the second SIM card on the 4G network. After the first terminal device registers the second SIM card on the 4G network, the first terminal device no longer has the dual-SIM dual-active function.

S606: Send a cancel message to the base station, to reject an incoming call of the second SIM card. It should be understood that, in this case, the first SIM card of the first terminal device is registered on the 5G network, the second SIM card is registered on the 4G network, and the first terminal device no longer has the dual-SIM dual-active function. Therefore, the first terminal device cannot send the hang up message to the network side, but locally hangs up the incoming call of the second SIM card.

In this embodiment of this application, after receiving the B1 event/B2 event, and when a reporting condition of a measurement report of the B1 event/B2 event is met, the first terminal device determines whether the first SIM card and the second SIM card meet a preset condition. When the preset condition is met, the first terminal device delays reporting of the measurement report of the B1 event/B2 event, first sends the hang up message for rejecting the incoming call of the second SIM card to the network side, then reports the measurement report of the B1 event/B2 event after receiving the acknowledgment message of the hang up message from the network side, and then registers the second SIM card on the 4G network, to implement network switching. This helps improve success rate of sending the hang up message, and helps achieve synchronization of the session status of the SIM card between the first terminal device and the network side, thereby avoiding a problem that the SIM card of the first terminal device cannot perform a call service subsequently.

An example in which the terminal device A in b in FIG. 2 has a 5G dual-SIM dual-active function is used. In a possible scenario, when the terminal device A is performing a VoNR call with the terminal device B by using the SIM card 1, the terminal device A receives an incoming call from the terminal device C by using the SIM card 2 at this time. In response to a user operation, the terminal device A answers the incoming call of the terminal device C and holds the call with the terminal device B. That the terminal device A holds the call with the terminal device B means that the call is temporarily suspended without being hung up. After the call between the terminal device A and the terminal device C ends, the terminal device A may recover the call with the terminal device B.

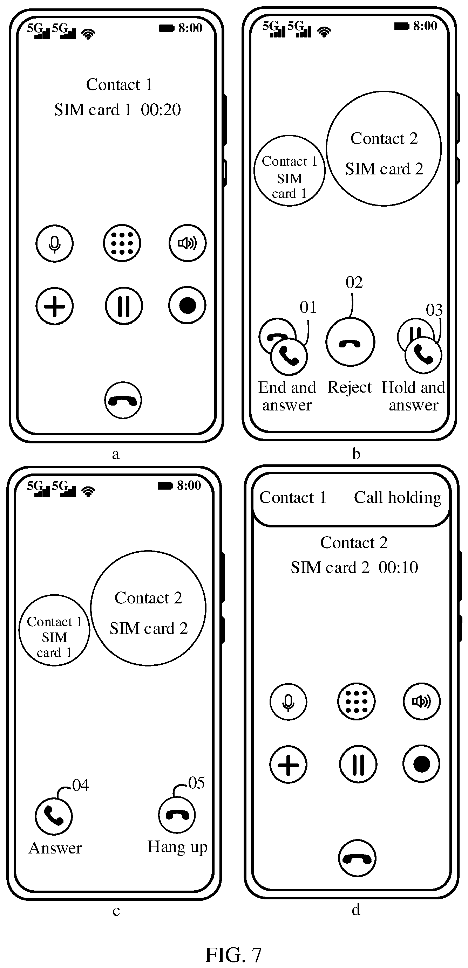

FIG. 7 is a schematic diagram of a call interface of a terminal device having a 5G dual-SIM dual-active function according to an embodiment of this application.

As shown in a in FIG. 7, a terminal device A is performing a VoNR call with a terminal device B by using a SIM card 1, and the terminal device A displays a call interface with the terminal device B.

In a process in which the terminal device A makes the call with the terminal device B by using the SIM card 1, a SIM card 2 of the terminal device A receives an incoming call from a terminal device C, and displays an incoming call interface.

b in FIG. 7 shows a possible incoming call interface. The incoming call interface includes a control 01 and a control 02. The control 01 is configured to end the call with the terminal device B by using the SIM card 1 and answer the incoming call of the terminal device C by using the SIM card 2. The control 02 is configured to reject the incoming call of the SIM card 2. A control 03 is configured to answer the incoming call of the SIM card 2 and hold the call of the SIM card 1.

c in FIG. 7 shows another possible incoming call interface. The incoming call interface includes a control 04 and a control 05. In a possible design, the control 04 is configured to answer the incoming call of the SIM card 2 and hold the call of the SIM card 1, and the control 05 is configured to hang up the incoming call of the SIM card 2. In another possible design, the control 04 is configured to answer the incoming call of the SIM card 2 and hang up the call of the SIM card 1.

An example in which the user selects the control 03 or the control 04, and the control 04 is configured to answer the incoming call of the SIM card 2 and hold the call of the SIM card 1 is used. As shown in d in FIG. 7, after the user answers the incoming call of the terminal device C on the terminal device A, the terminal device A performs a VoNR call with the terminal device C by using the SIM card 2, and the terminal device A displays a call interface with the terminal device C. In this case, the call between the terminal device A and the terminal device B is held without being hung up, and subsequently, the user may switch back to the call with the terminal device B on the terminal device A after hanging up the call of the SIM card 2.

However, in a process in which the terminal device A communicates with the terminal device C by using the SIM card 2, and holds the call with the terminal device B, if the terminal device A switches the SIM card 2 from a 5G network to a 4G network, the terminal device A no longer has the dual-SIM dual-active function. In this case, the terminal device A cannot meet a requirement of calling on both two SIM cards, and may hang up the call with the terminal device B by using the SIM card 1, and continue the call with the terminal device C by using the SIM card 2. However, after the terminal device A switches the SIM card 2 from the 5G network to the 4G network, a message indicating that the terminal device A hangs up the call of the SIM card 1 cannot be synchronized to the network side. Therefore, subsequently, the terminal device A cannot call and be called by using the SIM card 1.

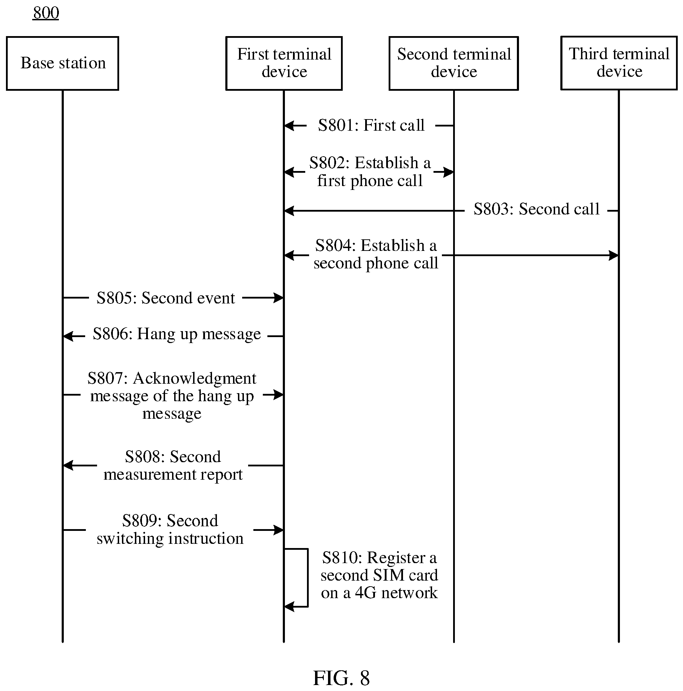

Based on the foregoing problem, FIG. 8 is a schematic flowchart of still another data transmission method 800 according to an embodiment of this application. The method 800 is applied to a communication system including a first terminal device, a second terminal device, a third terminal device, and a base station. The first terminal device is provided with a first SIM card and a second SIM card, the first SIM card is registered on a first network, and the second SIM card is registered on a second network.

With reference to FIG. 3 and FIG. 7, the method 800 shows a process in which the first terminal device performs network switching in a scenario in which the first terminal device holds a call with the second terminal device and makes a call with the third terminal device. For specific descriptions, refer to S801 to S810.

In this embodiment of this application, when the first SIM card is registered on the first network and the second SIM card is registered on the second network, the first terminal device has a dual-SIM dual-active function. The first network and the second network may be the same or may be different. This embodiment of this application is described by using an example in which the first terminal device has the dual-SIM dual-active function when the first network and the second network are the same.

In this embodiment of this application, the first terminal device may correspond to the terminal device A shown in b in FIG. 2. When the first network is a 5G network and the second network is a 5G network, the first terminal device has the dual-SIM dual-active function. When at least one of the first network and the second network is a 4G network, the first terminal device does not have the dual-SIM dual-active function. The second terminal device may correspond to the terminal device B in b in FIG. 2, and the third terminal device may correspond to the terminal device C shown in b in FIG. 2.

The method 800 includes S801 to S810, and the specific steps are as follows.

S801: The second terminal device sends a first call to the first terminal device. Correspondingly, the first terminal device receives the first call from the second terminal device.

With reference to the descriptions of the foregoing method 300, the first terminal device and the second terminal device may communicate with each other by using a base station, a core network device, and an IMS device. The first call may be the first INVITE message in S301. After receiving the first call, the first terminal device may interact with the second terminal device to perform S302 to S308.

S802: The first terminal device establishes a first phone call with the second terminal device in response to an operation of a user of answering the first call on the first terminal device.

With reference to the descriptions of the foregoing method 300, the first terminal device starts to ring after S307, and in S308, it is indicated to the second terminal device that the called party has ringed. After ringing, in response to an operation of the user, the first terminal device answers the incoming call from the second terminal device, and interacts with the second terminal device to perform S309 and S310, to establish the first phone call.

S803: The third terminal device sends a second call to the first terminal device during the first phone call. Correspondingly, the first terminal device receives the second call, and the first call and the second call respectively call a number of the first SIM card and a number of the second SIM card. This embodiment of this application is described by using an example in which the first call is a call to a number of the first SIM card, and the second call is a call to a number of the second SIM card.

With reference to the descriptions of the foregoing method 300, the first terminal device and the third terminal device may communicate with each other by using the base station, the core network device, and the IMS device. The second call may be the second INVITE message in S311. After receiving the second call, the first terminal device may interact with the third terminal device to perform S312 to S318.

Descriptions of the foregoing S801 to S803 are similar to those of S501 to S503, and details are not described herein again.

S804: The first terminal device establishes a second phone call with the second terminal device in response to an operation of a user of answering the second call on the first terminal device, where the first phone call is held.

With reference to the descriptions of the foregoing method 300, the first terminal device starts to ring after S317, and in S318, it is indicated to the third terminal device that the called party has ringed. After ringing, in response to an operation of the user, the first terminal device answers the incoming call from the third terminal device, and interacts with the third terminal device to perform S321 and S322, to establish the second phone call.

That the first call is held reserved indicates that the first terminal device temporarily suspends the first phone call without hanging up (as shown in d in FIG. 7), a session path between the first terminal device and the second terminal device still exists, and the user may switch between the first phone call and the second phone call.

S805: The base station sends a second event to the first terminal device, and correspondingly, the first terminal device receives the second event.

For example, the second event is a B1 event/B2 event. For explanations of the B1 event/B2 event, refer to the descriptions for S404, and details are not described herein again.

S806: The first terminal device sends a hang up message to the base station, to end the first phone call. Correspondingly, the base station receives the hang up message.

In this step, after receiving the second event, the first terminal device sends the hang up message to the base station when having the dual-SIM dual-active function. Therefore, the hang up message can be normally sent to the network side.

With reference to the descriptions of the foregoing method 300, the hang up message may be the first BYE message in S319.

It should be understood that, after receiving the hang up message, the base station sends the hang up message to the IMS device through the core network device. In this way, the IMS device synchronizes the session status of the first SIM card to an unoccupied state. Then, when another terminal device calls the number of the first SIM card of the first terminal device, the first terminal device can normally receive an incoming call by using the first SIM card. Alternatively, the first terminal device may normally call another terminal device by using the first SIM card.

S807: The base station sends an acknowledgment message of the hang up message to the first terminal device. Correspondingly, the first terminal device receives the acknowledgment message of the hang up message.

With reference to the descriptions of the foregoing method 300, the acknowledgment message of the hang up message may be the sixth 200 OK in S320.

In this step, after receiving the acknowledgment message of the hang up message transparently transmitted by the IMS device through the core network device, the base station sends the acknowledgment message of the hang up message to the first terminal device. After receiving the acknowledgment message of the hang up message, the first terminal device may determine that the network side has synchronized the session status of the first SIM card.

S808: The first terminal device sends a second measurement report to the base station. Correspondingly, the base station receives the second measurement report.

It should be understood that, the second measurement report is a measurement report for the second event. After receiving the second event, the first terminal device measures signal quality of an inter-system neighbor cell of the first terminal device. When a reporting condition of a measurement report of the second event is met, the first terminal device sends the second measurement report to the base station. For example, the second event is the B1 event, and that a reporting condition of a measurement report of the second event is met including: The signal quality of the inter-system neighbor cell of a current serving cell of the first terminal device is higher than a first threshold.

S809: The base station sends a second switching instruction to the first terminal device, where the second switching instruction instructs the first terminal device to register the second SIM card on a third network, and network standards of the third network and the second network are different. Correspondingly, the first terminal device receives the second switching instruction.

In this step, after receiving the second measurement report reported by the first terminal device, the base station sends the second switching instruction to the first terminal device. For example, a network standard of the second network is a 5G NR standard, and a network standard of the third network is a 4G TDD-LTE standard.

S810: The first terminal device registers the second SIM card on the third network.

In this step, the first terminal device registers the second SIM card on the third network, and the third network is different from the first network. It may be understood as that, communication systems of the third network and the first network are different, for example, the first network is a 5G network, and the third network is a 4G network.

Based on the technical solutions of this application, in a process in which the first phone call on the first SIM card of the first terminal device is held and the first terminal device is performing the second phone call by using the second SIM card, if the first terminal device receives the second event of the base station, the first terminal device first sends a message indicating to hang up the first phone call on the first SIM card to the base station, after receiving an acknowledgment message of the message indicating to hang up the first phone call from the network side, the first terminal device sends the second measurement report to the base station, and further performs network switching based on an indication of the base station, and after the network switching, the first terminal device falls back from dual-SIM dual-active to dual-SIM single-active. Therefore, when sending the message indicating to hang up the first phone call, the first terminal device still has the dual-SIM dual-active function, and the message indicating to hang up the first phone call may be sent to the network side. In this way, the network side can synchronize the session status of the first SIM card to the unoccupied state, thereby helping avoid a problem that the first SIM card cannot call or be called subsequently.

An embodiment of this application provides a terminal device, and the terminal device includes a processor and a memory. The memory stores computer-executable instructions. The processor executes the computer-executable instructions stored in the memory, so that the terminal device performs the foregoing method.

An embodiment of this application provides a chip. The chip includes a processor, and the processor is configured to invoke a computer program in a memory, to perform the technical solutions in the foregoing embodiments. The implementation principles and technical effects thereof are similar to those in the related embodiments, and details are not described herein again.

An embodiment of this application further provides a computer-readable storage medium. The computer-readable storage medium stores a computer program. The computer program implements the foregoing method when being executed by a processor. All or some of methods described in the foregoing embodiments may be implemented by using software, hardware, firmware, or any combination thereof. If implemented by using software, a function may be stored on or transmitted on a computer-readable medium as one or more instructions or code. The computer-readable medium may include a computer storage medium and a communication medium, and may further include any medium that can transmit a computer program from one place to another. The storage medium may be any target medium accessible to a computer.

In a possible implementation, the computer-readable medium may include a random access memory (random access memory, RAM), a read-only memory (read-only memory, ROM), a compact disc read-only memory (compact disc read-only memory, CD-ROM) or another optical disk memory, a magnetic disk memory or another magnetic storage device, or any other medium that is to carry or store required program code in a form of an instruction or a data structure, and may be accessed by the computer. Furthermore, any connection is appropriately referred to as the computer-readable medium. For example, if software is transmitted from a website, a server, or another remote source by using a coaxial cable, an optical fiber cable, a twisted pair, a digital subscriber line (digital subscriber line, DSL), or wireless technologies such as infrared ray, radio, and microwave, the coaxial cable, optical fiber cable, twisted pair, DSL, or wireless technologies such as infrared ray, radio, and microwave are included in the definition of the medium. For example, a disk and a disc used in this application include a compact disc, a laser disc, an optical disc, a digital versatile disc (digital versatile disc, DVD), a floppy disk, and a Blu-ray disc. The disk generally magnetically reproduces data, and the disc optically reproduces data by using laser. The foregoing combination should also be included in the scope of the computer-readable medium.

An embodiment of this application provides a computer program product. The computer program product includes a computer program, and when the computer program is run, a computer is enabled to perform the foregoing method.

The embodiments of this application are described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a processing unit of a general-purpose computer, a dedicated computer, an embedded processor, or any other programmable data processing device to generate a machine, so that the instructions executed by a processing unit of a computer or any other programmable data processing device generate an apparatus for implementing a specific function in one or more procedures in the flowcharts and/or in one or more blocks in the block diagrams.

The objectives, technical solutions, and beneficial effects of this application are further described in detail in the foregoing specific embodiments. It should be understood that the foregoing descriptions are merely specific embodiments of this application, but are not intended to limit the protection scope of this application. Any modification, equivalent replacement, or improvement made based on the technical solutions in this application shall fall within the protection scope of this application.

## Claims

1. A data transmission method (400, 600), performed by a first terminal device (501), wherein the first terminal device (501) is provided with a first subscriber identity module, SIM, card and a second SIM card, the first SIM card is registered on a first network, and the second SIM card is registered on a second network; and the method (300, 400, 600) comprises:
receiving (S401), by the first terminal device (501), a first call from a second terminal device (502);
establishing (S402) a first phone call between the first terminal device (501) and the second terminal device (502) in response to an operation of a user of answering the first call on the first terminal device (501);
receiving (S403), by the first terminal device (501), a second call from a third terminal device (503) during the first phone call, wherein the first call and the second call respectively call a number of the first SIM card and a number of the second SIM card;
sending (S405), by the first terminal device (501), a cancel message after receiving (S404) a first inter-system measurement event from a base station, to reject the second call, wherein the second call is not answered when the first inter-system measurement event is received;
sending (S407), by the first terminal device (501), a first measurement report to the base station after receiving (S406) an acknowledgment message of the cancel message, wherein the first terminal device (501) meets a reporting condition of a measurement report of the first inter-system measurement event after receiving (S407) the first inter-system measurement event and before sending (S407) the first measurement report; and
receiving (S408), by the first terminal device (501), a first switching instruction from the base station, and registering the second SIM card on a third network, wherein the first and second network are 5G networks and the third network is a 4G network.

2. The method (300, 400, 600) according to claim 1, wherein after the receiving (S403), by the first terminal device (501), a second call from a third terminal device (503), and when answering the second call, the method (300, 400, 600) further comprises:
establishing a second phone call between the first terminal device (501) and the third terminal device (503) in response to the operation of the user of answering the first call on the first terminal device (501), wherein the first phone call is held;
sending, by the first terminal device (501), a hang up message after receiving a second event from the base station, to end the first phone call;
sending, by the first terminal device (501), a second measurement report to the base station after receiving an acknowledgment message of the hang up message, wherein the first terminal device (501) meets a reporting condition of a measurement report of the second event after receiving the second event and before sending the second measurement report; and
receiving, by the first terminal device (501), a second switching instruction from the base station, and registering the second SIM card on the third network.

3. The method (300, 400, 600) according to claim 1 or 2, wherein when the first network and the second network are fifth generation mobile communication technology, 5G, networks, the first terminal device has a dual-SIM dual-active function; and
when one network of the first network and the second network is a 5G network, and the other network is a fourth generation mobile communication technology, 4G, network, the first terminal device (501) has a dual-SIM single-active function.

4. The method (300, 400, 600) according to claim 3, wherein before the sending (S405), by the first terminal device (501), a cancel message, the method (300, 400, 600) comprises:
determining, by the first terminal device (501), that the first SIM card and the second SIM card are SIM cards registered on the 5G network, and that the first SIM card and the second SIM card are both in an occupied state, wherein the occupied state comprises a calling state or a call incoming state.

5. The method (300, 400, 600) according to any one of claims 1 to 4, wherein the first inter-system measurement event is a B1 event/B2 event; and after receiving (S407) the first inter-system measurement event from the base station, the method (300, 400, 600) further comprises:
measuring, by the first terminal device (501), signal quality of a first cell based on the B1 event/B2 event, wherein the first cell and a serving cell of the first terminal device (501) belong to different communication systems; and
obtaining, by the first terminal device (501), the first measurement report base on the signal quality of the first cell.

6. The method (300, 400, 600) according to any one of claims 1 to 5, wherein before receiving (S404) the first inter-system measurement event from the base station, the method (300, 400, 600) further comprises:
receiving, by the first terminal device (501), a third event from the base station, wherein the third event indicates to measure signal quality of the serving cell of the first terminal device (501); and
when the signal quality of the serving cell of the first terminal device (501) is lower than a threshold, sending, by the first terminal device (501), a third measurement report to the base station, wherein the third measurement report comprises the signal quality of the serving cell of the first terminal device (501).

7. The method (300, 400, 600) according to any one of claims 2 to 6, wherein the second switching instruction is sent by the base station after receiving the second measurement report.

8. A terminal device (100), configured to perform the method (300, 400, 600) according to any one of claims 1 to 7.

9. A computer-readable storage medium, configured to store a computer program, wherein when the computer program is run on the terminal device of claim 8, the terminal device is enabled to perform the method (300, 400, 600) according to any one of claims 1 to 7.

10. A computer program product, comprising a computer program, wherein when the computer program is run on the terminal device of claim 8, the terminal device is enabled to perform the method (300, 400, 600) according to any one of claims 1 to 7.

## Patentansprüche

1. Verfahren zur Datenübertragung (400, 600), das von einem ersten Endgerät (501) durchgeführt wird, wobei das erste Endgerät (501) mit einer ersten Teilnehmeridentitätsmodul-, SIM-, Karte und einer zweiten SIM-Karte ausgestattet ist, wobei die erste SIM-Karte in einem ersten Netzwerk registriert ist und die zweite SIM-Karte in einem zweiten Netzwerk registriert ist; und wobei das Verfahren (300, 400, 600) umfasst:
Empfangen (S401) eines ersten Anrufs von einem zweiten Endgerät (502) durch das erste Endgerät (501);
Aufbauen (S402) eines ersten Telefonanrufs zwischen dem ersten Endgerät (501) und dem zweiten Endgerät (502) als Reaktion auf eine Bedienung eines Benutzers zur Annahme des ersten Anrufs auf dem ersten Endgerät (501);
Empfangen (S403) eines zweiten Anrufs von einem dritten Endgerät (503) durch das erste Endgerät (501) während des ersten Telefonanrufs, wobei der erste Anruf und der zweite Anruf jeweils eine Nummer der ersten SIM-Karte und eine Nummer der zweiten SIM-Karte anrufen;
Senden (S405) einer Abbruchnachricht durch das erste Endgerät (501) nach dem Empfangen (S404) eines ersten inter-system-Messereignisses von einer Basisstation, um den zweiten Anruf abzuweisen, wobei der zweite Anruf nicht angenommen wird, wenn das erste inter-system-Messereignis empfangen wird;
Senden (S407) eines ersten Messberichts durch das erste Endgerät (501) an die Basisstation nach dem Empfangen (S406) einer Bestätigungsnachricht für die Abbruchnachricht, wobei das erste Endgerät (501) eine Berichtsbedingung eines Messberichts des ersten inter-system-Messereignisses nach dem Empfangen (S407) des ersten inter-system-Messereignisses und vor dem Senden (S407) des ersten Messberichts erfüllt; und
Empfangen (S408) eines ersten Umschaltbefehls durch das erste Endgerät (501) von der Basisstation und Registrieren der zweiten SIM-Karte in einem dritten Netzwerk, wobei das erste und das zweite Netzwerk 5G-Netzwerke sind und das dritte Netzwerk ein 4G-Netzwerk ist.

2. Verfahren (300, 400, 600) nach Anspruch 1, wobei nach dem Empfangen (S403) eines zweiten Anrufs von einem dritten Endgerät (503) durch das erste Endgerät (501) und beim Annehmen des zweiten Anrufs das Verfahren (300, 400, 600) ferner umfasst:
Aufbauen eines zweiten Telefonanrufs zwischen dem ersten Endgerät (501) und dem dritten Endgerät (503) als Reaktion auf die Bedienung des Benutzers zur Annahme des ersten Anrufs auf dem ersten Endgerät (501), wobei der erste Telefonanruf gehalten wird;
Senden einer Auflegen-Nachricht durch das erste Endgerät (501) nach dem Empfangen eines zweiten Ereignisses von der Basisstation, um den ersten Telefonanruf zu beenden;
Senden eines zweiten Messberichts durch das erste Endgerät (501) an die Basisstation nach Empfang einer Bestätigungsmeldung der Auflegen-Meldung, wobei das erste Endgerät (501) eine Meldebedingung eines Messberichts für das zweite Ereignis nach Empfang des zweiten Ereignisses und vor dem Senden des zweiten Messberichts erfüllt; und
Empfangen eines zweiten Umschaltbefehls durch das erste Endgerät (501) von der Basisstation und Registrieren der zweiten SIM-Karte im dritten Netzwerk.

3. Verfahren (300, 400, 600) nach Anspruch 1 oder 2, wobei, wenn das erste Netzwerk und das zweite Netzwerk Netzwerke der fünften Generation der Mobilfunktechnologie, 5G, sind, das erste Endgerät eine Dual-SIM-Dual-Active-Funktion aufweist; und
wenn ein Netzwerk des ersten Netzwerks und des zweiten Netzwerks ein 5G-Netzwerk ist und das andere Netzwerk ein Netzwerk der vierten Generation der Mobilfunktechnologie, 4G, ist, das erste Endgerät (501) eine Dual-SIM-Single-Active-Funktion aufweist.

4. Verfahren (300, 400, 600) nach Anspruch 3, wobei vor dem Senden (S405) einer Abbruchmeldung durch das erste Endgerät (501) das Verfahren (300, 400, 600) umfasst:
Bestimmen durch das erste Endgerät (501), dass die erste SIM-Karte und die zweite SIM-Karte auf dem 5G-Netzwerk registrierte SIM-Karten sind und dass sich sowohl die erste SIM-Karte als auch die zweite SIM-Karte in einem belegten Zustand befinden, wobei der belegte Zustand einen Anrufzustand oder einen ankommenden Anrufzustand umfasst.

5. Verfahren (300, 400, 600) nach einem der Ansprüche 1 bis 4, wobei das erste systemübergreifende Messereignis ein B1-Ereignis/B2-Ereignis ist; und nach dem Empfangen (S407) des ersten systemübergreifenden Messereignisses von der Basisstation das Verfahren (300, 400, 600) ferner umfasst:
Messen der Signalqualität einer ersten Zelle durch das erste Endgerät (501) basierend auf dem B1-Ereignis/B2-Ereignis, wobei die erste Zelle und eine bedienende Zelle des ersten Endgeräts (501) zu unterschiedlichen Kommunikationssystemen gehören; und
Erlangen des ersten Messberichts durch das erste Endgerät (501) basierend auf der Signalqualität der ersten Zelle.

6. Verfahren (300, 400, 600) nach einem der Ansprüche 1 bis 5, wobei vor dem Empfangen (S404) des ersten systemübergreifenden Messereignisses von der Basisstation das Verfahren (300, 400, 600) ferner umfasst:
Empfangen eines dritten Ereignisses durch das erste Endgerät (501) von der Basisstation, wobei das dritte Ereignis anzeigt, die Signalqualität der bedienenden Zelle des ersten Endgeräts (501) zu messen; und
Wenn die Signalqualität der bedienenden Zelle des ersten Endgeräts (501) unter einem Schwellenwert liegt, sendet das erste Endgerät (501) einen dritten Messbericht an die Basisstation, wobei der dritte Messbericht die Signalqualität der bedienenden Zelle des ersten Endgeräts (501) umfasst.

7. Verfahren (300, 400, 600) nach einem der Ansprüche 2 bis 6, wobei der zweite Umschaltbefehl von der Basisstation nach dem Empfang des zweiten Messberichts gesendet wird.

8. Endgerät (100), das dazu konfiguriert ist, das Verfahren (300, 400, 600) nach einem der Ansprüche 1 bis 7 auszuführen.

9. Computerlesbares Speichermedium, das dazu konfiguriert ist, ein Computerprogramm zu speichern, wobei, wenn das Computerprogramm auf dem Endgerät nach Anspruch 8 ausgeführt wird, das Endgerät in die Lage versetzt wird, das Verfahren (300, 400, 600) nach einem der Ansprüche 1 bis 7 auszuführen.

10. Computerprogrammprodukt, umfassend ein Computerprogramm, wobei, wenn das Computerprogramm auf dem Endgerät nach Anspruch 8 ausgeführt wird, das Endgerät in die Lage versetzt wird, das Verfahren (300, 400, 600) nach einem der Ansprüche 1 bis 7 auszuführen.

## Revendications

1. Procédé de transmission de données (400, 600), exécuté par un premier dispositif terminal (501), dans lequel le premier dispositif terminal (501) est doté d'une première carte de module d'identité d'abonné (SIM) et d'une seconde carte SIM, la première carte SIM étant enregistrée sur un premier réseau et la seconde carte SIM étant enregistrée sur un second réseau ; et le procédé (300, 400, 600) comprend :
la réception (S401), par le premier dispositif terminal (501), d'un premier appel provenant d'un second dispositif terminal (502) ;
l'établissement (S402) d'un premier appel téléphonique entre le premier dispositif terminal (501) et le second dispositif terminal (502) en réponse à une opération d'un utilisateur consistant à répondre au premier appel sur le premier dispositif terminal (501) ;
la réception (S403), par le premier dispositif terminal (501), d'un second appel provenant d'un troisième dispositif terminal (503) pendant le premier appel téléphonique, dans lequel le premier appel et le second appel appellent respectivement un numéro de la première carte SIM et un numéro de la seconde carte SIM ;
l'envoi (S405), par le premier dispositif terminal (501), d'un message d'annulation après la réception (S404) d'un premier événement de mesure inter-système provenant d'une station de base, pour rejeter le second appel, dans lequel le second appel n'est pas reçu lorsque le premier événement de mesure inter-système est reçu ;
l'envoi (S407), par le premier dispositif terminal (501), d'un premier rapport de mesure à la station de base après la réception (S406) d'un message d'accusé de réception du message d'annulation, dans lequel le premier dispositif terminal (501) satisfait à une condition de rapport d'un rapport de mesure du premier événement de mesure inter-système après la réception (S407) du premier événement de mesure inter-système et avant l'envoi (S407) du premier rapport de mesure ; et
la réception (S408), par le premier dispositif terminal (501), d'une première instruction de commutation provenant de la station de base, et l'enregistrement de la seconde carte SIM sur un troisième réseau, dans lequel le premier et le second réseau sont des réseaux 5G et le troisième réseau est un réseau 4G.

2. Procédé (300, 400, 600) selon la revendication 1, dans lequel, après la réception (S403), par le premier dispositif terminal (501), d'un second appel provenant d'un troisième dispositif terminal (503), et lors de la réponse au second appel, le procédé (300, 400, 600) comprend en outre :
l'établissement d'un second appel téléphonique entre le premier dispositif terminal (501) et le troisième dispositif terminal (503) en réponse à l'opération de l'utilisateur consistant à répondre au premier appel sur le premier dispositif terminal (501), dans lequel le premier appel téléphonique est mis en attente ;
l'envoi, par le premier dispositif terminal (501), d'un message de raccrochage après la réception d'un second événement provenant de la station de base, pour mettre fin au premier appel téléphonique ;
envoi, par le premier terminal (501), d'un second rapport de mesure à la station de base après réception d'un message d'accusé de réception du message de raccrochage, dans lequel le premier terminal (501) satisfait à une condition de rapport d'un rapport de mesure du second événement après réception du second événement et avant l'envoi du second rapport de mesure ; et
réception, par le premier terminal (501), d'une seconde instruction de commutation en provenance de la station de base, et enregistrement de la seconde carte SIM sur le troisième réseau.

3. Procédé (300, 400, 600) selon la revendication 1 ou 2, dans lequel, lorsque le premier réseau et le second réseau sont des réseaux de technologie de communication mobile de cinquième génération, 5G, le premier terminal dispose d'une fonction double SIM double actif ; et
lorsque l'un des réseaux parmi le premier réseau et le second réseau est un réseau 5G, et que l'autre réseau est un réseau de technologie de communication mobile de quatrième génération, 4G, le premier terminal (501) dispose d'une fonction double SIM actif simple.

4. Procédé (300, 400, 600) selon la revendication 3, dans lequel, avant l'envoi (S405), par le premier terminal (501), d'un message d'annulation, le procédé (300, 400, 600) comprend :
la détermination, par le premier terminal (501), que la première carte SIM et la seconde carte SIM sont des cartes SIM enregistrées sur le réseau 5G, et que la première carte SIM et la seconde carte SIM sont toutes deux dans un état occupé, l'état occupé comprenant un état d'appel en cours ou un état d'appel entrant.

5. Procédé (300, 400, 600) selon l'une quelconque des revendications 1 à 4, dans lequel le premier événement de mesure inter-système est un événement B1/événement B2 ; et après réception (S407) du premier événement de mesure inter-système en provenance de la station de base, le procédé (300, 400, 600) comprend en outre :
la mesure, par le premier terminal (501), de la qualité du signal d'une première cellule basée sur l'événement B1/événement B2, la première cellule et une cellule de desserte du premier terminal (501) appartenant à des systèmes de communication différents ; et
l'obtention, par le premier terminal (501), du premier rapport de mesure basé sur la qualité du signal de la première cellule.

6. Procédé (300, 400, 600) selon l'une quelconque des revendications 1 à 5, dans lequel, avant la réception (S404) du premier événement de mesure inter-système en provenance de la station de base, le procédé (300, 400, 600) comprend en outre :
la réception, par le premier terminal (501), d'un troisième événement en provenance de la station de base, le troisième événement indiquant de mesurer la qualité du signal de la cellule de desserte du premier terminal (501) ; et
lorsque la qualité du signal de la cellule de desserte du premier dispositif terminal (501) est inférieure à un seuil, envoi, par le premier dispositif terminal (501), d'un troisième rapport de mesure à la station de base, dans lequel le troisième rapport de mesure comprend la qualité du signal de la cellule de desserte du premier dispositif terminal (501).

7. Procédé (300, 400, 600) selon l'une quelconque des revendications 2 à 6, dans lequel la seconde instruction de commutation est envoyée par la station de base après réception du second rapport de mesure.

8. Dispositif terminal (100), configuré pour exécuter le procédé (300, 400, 600) selon l'une quelconque des revendications 1 à 7.

9. Support de stockage lisible par ordinateur, configur é pour stocker un programme informatique, dans lequel, lorsque le programme informatique est exécuté sur le dispositif terminal de la revendication 8, le dispositif terminal est capable d'exé cuter le procédé (300, 400, 600) selon l'une quelconque des revendications 1 à 7.

10. Produit programme informatique, comprenant un programme informatique, dans lequel, lorsque le programme informatique est exécuté sur le dispositif terminal de la revendication 8, le dispositif terminal est capable d'exécuter le procédé (300, 400, 600) selon l'une quelconque des revendications 1 à 7.
